# EUROPEAN PATENT SPECIFICATION

(11) **EP 3 708 980 B1**
(45) Date of publication and mention of the grant of the patent: **09.02.2022**
(21) Application number: 19199770.9
(22) Date of filing: 26.09.2019
(51) Int. Cl.: G01J 1/42, G01J 1/02, G01J 1/04, G01J 1/44

(54) **CONSTANT LIGHT SYSTEM AND AMBIENT-LIGHT INTENSITY DETECTOR THEREOF**
KONSTANTLICHTSYSTEM UND UMGEBUNGSLICHTINTENSITÄTSDETEKTOR DAFÜR
SYSTÈME DE LUMIÈRE CONSTANTE ET SON DÉTECTEUR D'INTENSITÉ DE LUMIÈRE AMBIANTE

(30) Priority: 15.03.2019 CN 201910197299
(43) Date of publication of application: 16.09.2020
(73) Proprietor: Shenzhen Merrytek Technology Co., Ltd, Shenzhen, Guangdong 518127 (CN)
(72) Inventor: ZOU, Gaodi, Shenzhen, Guangdong 518127 (CN); ZOU, Xin, Shenzhen, Guangdong 518127 (CN)
(74) Representative: Casalonga

(56) References cited:
- EP-A1- 1 566 616
- WO-A2-2013/005933
- DE-A1-102015 003 712
- US-A1- 2014 056 004
- US-A1- 2017 356 799

## Description

### BACKGROUND OF THE PRESENT INVENTION

### FIELD OF INVENTION

The present invention relates to an ambient-light detecting apparatus, and more particularly to a constant light system and an ambient-light intensity detector thereof.

### DESCRIPTION OF RELATED ARTS

Smart light fixture is widely used in recent years. A conventional smart light fixture typically includes a processing system, at least one light sensor and at least one lighting fixture, wherein each light sensor and each lighting fixture are electrically and/or communicatively linked with the processing system. Each light sensor includes a potentiometer adapted for adjustably indicating a detecting value of the light sensor when the smart lamp fixture is utilized in a particular use environment. In particular, the detecting value of the light sensor is associated with an expected ambient-light intensity. For instance, while the intensity of the ambient light is detected lower than the present detecting value of the light sensor, the light sensor would generate a detecting signal which is then received and processed by the processing system in other to control the operation status of the light fixture subsequently, for example, to selectively turn on the light fixture or adjust the luminous intensity of the lighting fixtures, ensuring the intensity of the ambient light of the use environment meeting the users' expectation. Although the conventional smart light fixture provides much convenience, it still has a lot of drawbacks.

Firstly, since the light sensor detects the intensity of the ambient light by receiving and analyzing a reflection light from a stationary object in the use environment, the detection result of the light sensor is vulnerably influenced by the reflectivity index of the corresponding reflecting object, causing a detection offset with the actual intensity of the ambient-light. More specifically, there is a diversity of objects in the use environment that, for example, in an office room, the objects would be the desks, A4-paper disposed on the desk, keyboards, screen of a cellphone, and so on, which are made of different materials and in different colors and have different reflectivity indexes at their reflecting surface respectively, such that the detection results of the light sensor corresponding to the different reflection lights from different reflecting surfaces are various or even opposite. In other words, the detection result of the conventional smart light fixture may be interfered by the objects in the use environment.

Secondly, the detecting value of the light sensor of the conventional smart light fixture is controllably adjusted by the potentiometer. The core configuration of the potentiometer includes a slid rheostat, which is configured to adjust the detecting value of the light sensor by changing the relative positions between a resistor body and a removable brush thereof, that causes errors in the detecting value of the light sensor.

More specifically, even if the current relative position of the resistor body and the removable brush of the potentiometer are adjusted to be consistent with the previous one, the detecting value of the light sensor at the current position is still different from that of the previous one. If the conventional smart light fixture merely includes one light sensor, the error generated by the potentiometer has little impact on the conventional smart light fixture, but when the conventional smart light fixture includes multiple light sensors, the detecting values of multiple light sensors may not be unified to detect an actual intensity of the ambient light due to the error caused by the potentiometer.

Ambient light sensors comprising light scattering or diffusing elements and a converging element in front of the photo sensor are known from WO2013/005933 A2 or US2017/0356799 A1.

### SUMMARY OF THE PRESENT INVENTION

The invention is advantageous in that it provides a constant light system and an ambient-light intensity detector thereof, wherein the adverse effects to the detection accuracy of the ambient-light intensity detector caused by different surface reflectivity indexes of the one or more objects in the use environment can be minimized, so as to improve the accuracy of the detection result of the ambient-light intensity detector.

Another advantage of the invention is to provide a constant light system and an ambient-light intensity detector thereof, wherein by virtualizing the reflection light from the corresponding object in the use environment, the ambient-light intensity detector is capable of reducing the adverse effects to the accuracy of the detection results of the ambient-light intensity detector with respect to the different surface reflectance of the one or more objects in the use environment.

Another advantage of the invention is to provide a constant light system and an ambient-light intensity detector thereof, wherein the ambient-light intensity detector contains a plurality of preset control scales corresponding to the detecting values of the photosensitive element respectively.

Another advantage of the invention is to provide a constant light system and an ambient-light intensity detector thereof, wherein the ambient-light intensity detector provides a plurality of preset control scales so as to facilitate the unifying of the detecting values of the multiple ambient-light intensity detectors.

Another advantage of the invention is to provide a constant light system and an ambient-light intensity detector thereof, wherein the detection range of the ambient-light intensity detector can be adjusted according to the actual condition of the use environment, so as to improve the applicability and flexibility thereof.

Another advantage of the invention is to provide a constant light system and an ambient-light intensity detector thereof, wherein the ambient-light intensity detector comprises a light-uniforming element and a light-converging element, wherein the light-converging component defines a light-converging path, and the light-uniforming component and the photosensitive surface of the photosensitive element are retained in the light-converging path, wherein the light-uniforming component is configured to make the reflection lights reflected from the one or more objects losing their original propagation directions during passing through the light-uniforming component, wherein the light-converging component is configured to converge the reflected lights of the one or more objects to the light-converging path.

Another advantage of the invention is to provide a constant light system and an ambient-light intensity detector thereof, wherein during detecting the intensity of the ambient light in the use environment, the ambient-light intensity detector enables the reflection lights losing their original propagation directions while passing through the light-uniforming component to form one or more pending detection lights which are then converged to the light-converging path by the light-converging component for being received and sensed at the photosensitive surface of the photosensitive element, such that the adverse effects to the accuracy of the detection results of the ambient-light intensity detector with respect to the different surface reflectance of the one or more objects in the use environment can be substantially reduced.

Another advantage of the invention is to provide a constant light system and an ambient-light intensity detector thereof, wherein a distance between the light-converging component and the photosensitive element can be adjusted so as to adjust a detection range of the ambient-light intensity detector, such that the ambient-light intensity detector is adapted to be applied in many different applications in various use environments.

Another advantage of the invention is to provide a constant light system and an ambient-light intensity detector thereof, wherein the light-converging component defines a central axis, wherein the light-converging component is configured to converge nonselectively and undistinguishably the pending detection lights around the central axis to the light-converging component.

Another advantage of the invention is to provide a constant light system and an ambient-light intensity detector thereof, wherein the light-uniforming component is configured to uniformly and evenly mix the reflection lights around the central axis nonselectively to form the pending detection lights.

Another advantage of the invention is to provide a constant light system and an ambient-light intensity detector thereof, wherein the photosensitive is configured to arrange the photosensitive surface of the photosensitive element perpendicular to the central axis of the light-converging component, such that the pending detection lights, after being converged to the light-converging path by the light-converging component, can be directly received at the photosensitive surface of the photosensitive element.

Another advantage of the invention is to provide a constant light system and an ambient-light intensity detector thereof, wherein the ambient-light intensity detector further comprises a light-deflecting element, configured to change the propagation directions of the pending detection lights, enabling the pending detection lights to be received and sensed by the photosensitive surface of the photosensitive element.

Another advantage of the invention is to provide a constant light system and an ambient-light intensity detector thereof, wherein the ambient-light intensity detector comprises a housing which defines a detection environment, wherein the photosensitive element receives the pending detection light in the detection environment to detect the intensity of the ambient light of the use environment, so as to avoid the interference of the detection result of the ambient-light intensity detector by the direct external light.

Another advantage of the invention is to provide a constant light system and an ambient-light intensity detector thereof, wherein the ambient-light intensity detector comprises a controller electrically and/or communicatively linked with the photosensitive element, wherein the controller contains a plurality of preset control scales corresponding to the detecting values respectively. In other words, the ambient-light intensity detector provides the plurality of preset control scales to unify the detecting values in various use environments.

Additional advantages and features of the invention will become apparent from the description which follows, and may be realized by means of the instrumentalities and combinations particular point out in the appended claims.

According to the present invention, the foregoing and other objects and advantages are attained by an ambient-light intensity detector with the features defined in claim 1. Favourable modifications are defined in the dependent claims.

Still further objects and advantages will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

Fig. 1 is a perspective view of an ambient-light intensity detector according to a first preferred embodiment of the present invention.
Fig. 2 is an exploded view of the ambient-light intensity detector according to the first preferred embodiment of the present invention.
Fig. 3A is a partial sectional front perspective view of the ambient-light intensity detector according to the above first preferred embodiment of the present invention.
Fig. 3B is a partial sectional rear perspective view of the ambient-light intensity detector according to the above first preferred embodiment of the present invention.
Fig. 4 is a sectional view of the ambient-light intensity detector according to the above first preferred embodiment of the present invention, illustrating the detecting of the light intensity of a use environment.
Fig. 5A is a sectional view of the ambient-light intensity detector according to a first alternative mode of the above first preferred embodiment of the present invention.
Fig. 5B is a sectional view of the ambient-light intensity detector according to a second alternative mode of the above first preferred embodiment of the present invention.
Fig. 5C is a sectional view of the ambient-light intensity detector according to a third alternative mode of the above first preferred embodiment of the present invention.
Fig. 5D is a sectional view of the ambient-light intensity detector according to a fourth alternative embodiment of the first preferred embodiment of the present invention.
Fig. 6 is a perspective view of the ambient-light intensity detector according to a fifth alternative mode of the above first preferred embodiment of the present invention.
Fig. 7A is a schematic view of a constant light system.
Fig. 7B is a schematic view of the constant light system.
Fig. 8A is a partial sectional front perspective view of an ambient-light intensity detector according to a second preferred embodiment of the present invention.
Fig. 8B is a partial sectional rear perspective view of the ambient-light intensity detector according to the above second preferred embodiment of the present invention.
Fig. 8C is a sectional view of the ambient-light intensity detector according to the above second preferred embodiment of the present invention, illustrating the detecting of the light intensity of ambient light of the use environment.
Fig. 9A is a partial sectional front perspective view of an ambient-light intensity detector according to a third preferred embodiment of the present invention.
Fig. 9B is a partial sectional rear perspective view of the ambient-light intensity detector according to the above third preferred embodiment of the present invention.
Fig. 9C is a sectional view of the ambient-light intensity detector according to the above third preferred embodiment of the present invention, illustrating the detecting of the light intensity of ambient light of the use environment.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

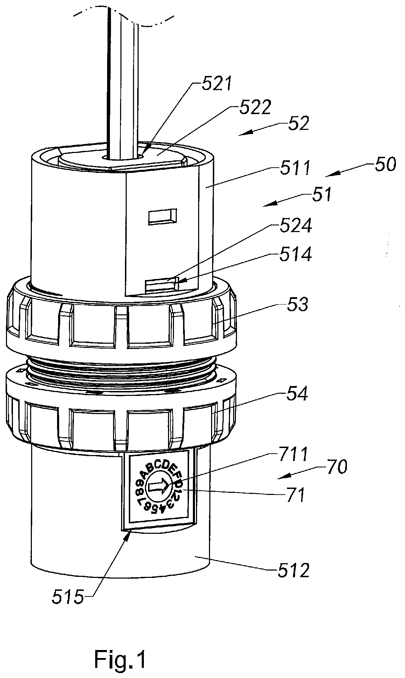

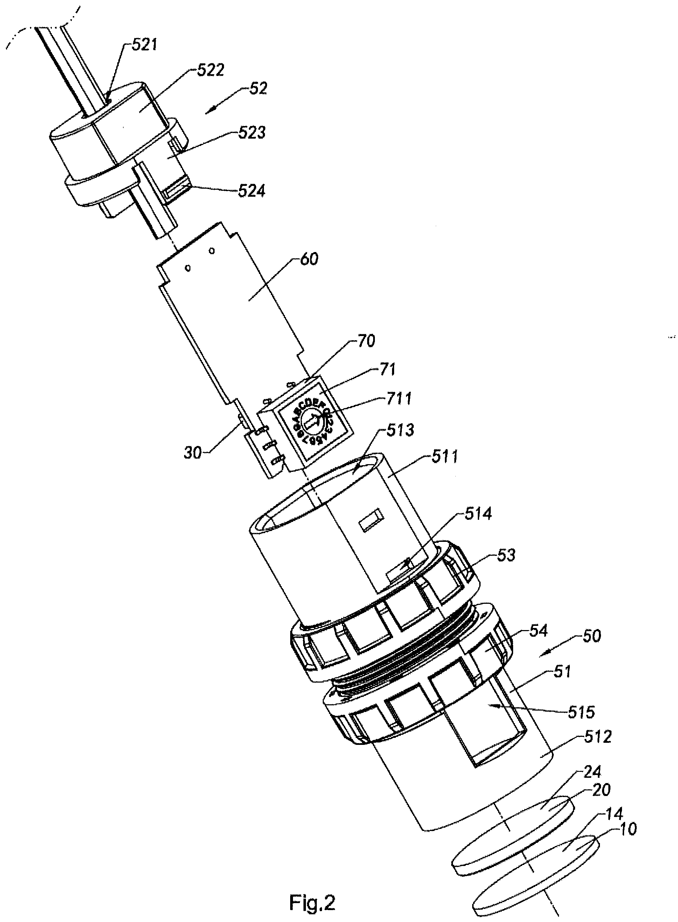

Referring to the Fig. 1 to Fig. 4 of the drawings, an ambient-light intensity detector according to a first preferred embodiment of the present invention is illustrated, wherein the ambient-light intensity detector 100 comprises a light-uniforming component 10, a light-converging component 20 and a photosensitive element 30, wherein the light-converging component 20 defines a light-converging path 40. The light-uniforming component 10 is retained in the light-converging path 40 defined by the light-converging component 20 and configured to uniformly and evenly mix the reflection lights reflected from one or more objects in a use environment (where the detector 100 is utilized) to form one or more pending detection lights during the reflection light passing through the light-uniforming component 10. The light-converging component 20 is configured to converge the detection lights to the light-converging path 40. The photosensitive element 30 has a photosensitive surface 31 retained in the light-converging path 40 defined by the light-converging component 20 and configured to be able to receive the pending detection lights converged in the light-converging path 40 by the light-converging component 20 for processing a detection of the pending detection lights by the photosensitive element 30 so as to detect the intensity of the ambient light in the use environment.

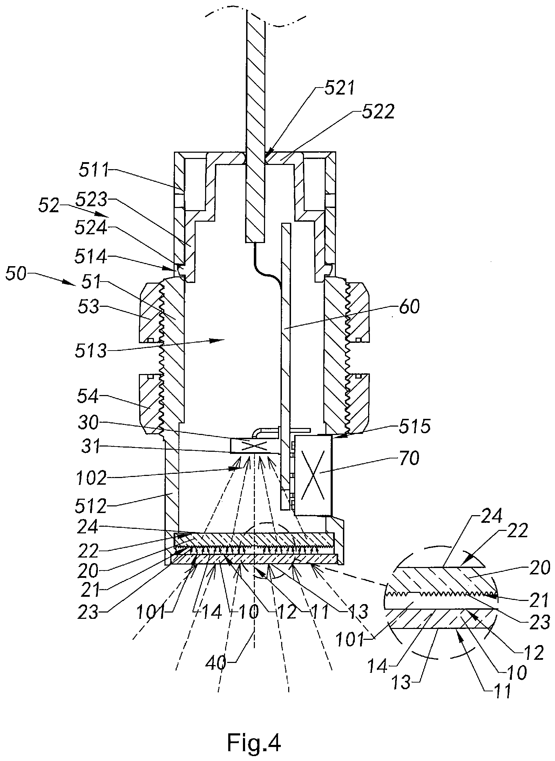

Accordingly, the ambient-light intensity detector 100 is configured to process a light uniforming treatment by means of the light-iniforming component 10 to uniformly and evenly mix the one or more reflection lights reflected from one or more objects in the use environment (for example, as shown in Figs. 4, 7A, 7B, 8C, 9C, the reflection lights illustrated as dotted lines entering the light-uniforming component 10 being reflected by one or more objects in the use environment (not shown in figures) transmitting through the light-uniforming component 10), wherein the light-uniforming component 10 is configured to make the one or more reflection lights losing their original propagation directions to form the uniform and even pending detection lights, i.e. to virtualize the one or more reflection lights of the one or more objects, so that the adverse effects to the accuracy of the detection result of the ambient-light intensity detector 100 with respect to the different surface reflectance of the one or more objects in the use environment can be reduced. In other words, the ambient-light intensity detector 100 is able to weaken or even eliminate the adverse effects to the detection accuracy of the ambient-light intensity detector 100 caused by the different surface reflectance of the one or more objects in the use environment by uniformly and evenly mix the one or more reflection lights from the one or more objects in the use environment through the light-uniforming component 10 according to the present invention, such that the detection result obtained by the ambient-light intensity detector 100 is capable of matching with the actual condition of the use environment.

Accordingly, the ambient-light intensity detector 100 is able to increase its detection range by converging and/or gathering as much as pending reflection lights to the light-converging path 40 by means of the light-converging component 20, such that the adverse effects to the detection accuracy caused by the different surface reflectance of the one or more objects in the use environment can be further reduced.

Please referring to Figs. 1 to 4 of the drawings, the light-converging component 20 of the ambient-light intensity detector 100 is embodied as a light transmissive optical element that is configured to refract the pending detection lights while passing through the light-converging component 20 and converge the pending detection lights to the light-converging path 40. Accordingly, the light-converging component 20 has an light-entering side 21 and an opposing light-emerging side 22 corresponding to the light-entering side 21, wherein the light-uniforming component 10 is retained in the light-converging path 40 adjacent to the light-entering side 21 of the light-converging component 20 and the photosensitive element 30 is retained in the light-converging path 40 adjacent to the light-emerging side 22 of the light-converging component 20, such that the one or more reflection lights reflected from the one or more objects in the use environment being uniformly and evenly mixed to form the pending detection lights after passing through the light-uniforming component 10 are ensured to be refracted and converged to the light-converging path 40 for being received at the photosensitive surface 31 of the photosensitive element 30.

Preferably, the light-converging component 20 is embodied as a Fresnel lens to reduce the size of the light-converging component 20 and the manufacturing cost of the ambient-light intensity detector 100. In particular, the light-converging component 20 has a light-entering surface 23 and an opposing light-emerging surface 24, wherein the light-entering surface 23 of the light-converging component 20 is a side surface of the light-entering side 21 of the light-converging component 20 and has a plurality of concentric circular protruding tooth. Correspondingly, the light-emerging surface 24 of the light-converging component 20 is a flat light emerging surface formed at a side surface of the light-emerging side 22 of the light-converging component 20. Accordingly, the pending detection lights enter the light-converging component 20 from the light-entering surface 23 of the light-converging component 20 and emerge from the light-emerging surface 24 of the light-converging component 20, wherein the pending detection lights are converged to the light-converging path 40 through the light-converging component 20 and then the converged detection lights is received by the photosensitive element 30 at its photosensitive surface 31.

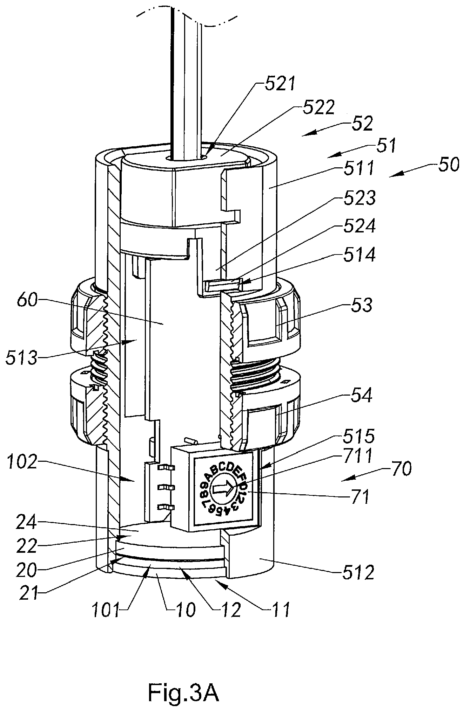

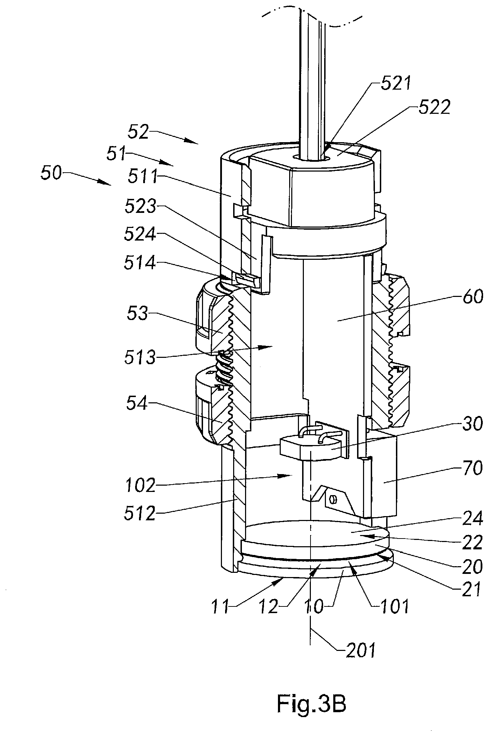

Furthermore, the light-converging component 20 defines a central axis 201, as shown in Fig. 3B, wherein the cross section of the light-converging component 20 has a centrosymmetric circular cross section along the thickness of the light-converging component 20 while the symmetric center of the light-converging component 20 is the central axis 201 of the light-converging component 20, such that the pending detection lights uniformly and evenly mixed from the reflection lights around the ambient-light intensity detector 100 by the light-uniforming component 10 can all be refracted and converged to the light converge path 40 by means of the light-converging component 20 nonselectively, such that the detection accuracy of the ambient-light intensity detector 100 can be enhanced.

As shown in the Figs. 1 to 4 of the drawings, the light-uniforming component 10 has a light-inletting side 11 and an opposing light-outletting side 12 correspondingly, wherein the light-uniforming component 10 is retained in the light-converging path 40 defined by the light-converging component 20 that the light-outletting side 12 of the light-uniforming component 10 faces towards the light-entering side 21 of the light-converging component 20, such that the one or more reflection lights from the one or more objects in the use environment firstly enters the light-uniforming component 10 from its light-inletting side 11 and then emerges from its light-outletting side 12, wherein the reflection lights are uniformly and evenly mixed and/or diffused by the light-uniforming component 10 to form the uniform and even pending detection lights adapted to be detected by the photosensitive element 40 in the ambient-light intensity detector 100. The pending detection light enters the light-converging component 20 from its light-entering side 21 and gets out from its light-emerging side 22, wherein the pending detection light is refracted and converged to the light-converging path 40 through the light-converging component 20.

Preferably, the light-uniforming component 10 has a centrosymmetric cross section along the thickness of the light-uniforming component 10 and the symmetric center of the light-uniforming component 10 is positioned along the central axis 201 defined by the light-converging component 20, such that the reflection lights around the ambient-light intensity detector 100 can be nonselectively mixed and/or diffused by the light-uniforming component 10 uniformly and evenly to form the uniform pending detection lights.

In other words, according to the ambient-light intensity detector 100 of the preferred embodiment as illustrated in the Figs. 1-4, the central axis 201 extends through the centers of the light-uniforming component 10 and the light-converging component 20, and that the cross sections of the light-converging component 20 and the light-uniforming component 10 at any position along their thickness directions are centrosymmetric shapes, and the symmetric centers of which are located along the central axis 201 defined by the light-converging component.

Furthermore, the light-uniforming component 10 has a light-inletting surface 13 and an opposing light-outletting surface correspondlgy, wherein the light-inletting surface 13 is a side surface of the light-inletting side 11 of the light-uniforming component 10 and the light-outletting surface 14 is a side surface of the light-outletting side 12 of the light-uniforming component 10. Accordingly, the one or more reflection lights reflected from the one or more objects in the use environment enter the light-uniforming component 10 from its light-inletting surface 13 and emerge from its light-outletting surface 14 so as to form the uniform pending detection lights.

It is worth mentioning that the types of the light-inletting surface 13 and the light-outletting surface 14 of the light-uniforming component 10 are not intended to be limited according to the preferred embodiment of the present invention. For instance, both of the light-inletting surface 13 and the light-outletting surface 14 of the light-uniforming component 10 can be embodied as smooth surfaces or both rough surfaces. Alternatively, the light-inletting surface 13 and the light-outletting surface 14 can be different types that, for example, one is a smooth surface and the other is a rough surface.

It is worth mentioning that although the light-inletting surface 13 and the light-outletting surface 14 of the light-uniforming component 10 are embodied as flat surfaces as an example as shown in the Fig. 1 to Fig. 4 of the drawings according to the present invention, person skilled in the art would understand that the description and features of the ambient-light intensity detector 100 in this embodiment, as shown in the Fig. 1 to Fig. 4, are not intended to limit the scope of the ambient-light intensity detector 100 of the present invention. In some examples, both the light-inletting surface 13 and the light-outletting surface 14 of the light-uniforming component 10 can be embodied as arc surfaces such as convex arc surface and concave arc surface. Alternatively, one of the light-inletting surface 13 and the light-outletting surface 14 of the light-uniforming component 10 is embodied as a convex arc surface and the other is embodied as a concave arc surface.

Referring to Fig. 1 to Fig. 4, a gap 101 is formed between the light-outletting surface 14 of the light-uniforming component 10 and the light-entering surface 23 of the light-converging component 20. In other words, the ambient-light intensity detector 100 further has a gap 101 defined between the light-outletting surface 14 of the light-uniforming component 10 and the light-entering surface 23 of the light-converging component 20. Accordingly, the one or more pending detection lights, emerging from the light-outletting surface 14 of the light-uniforming component 10, propagate through the gap 101 and enter the light-converging component 20 from the light-entering surface 23 of the light-converging component 20, wherein gas, such as, but not limited to, air, is filled in the gap 101 for reducing energy-loss of the pending detection lights while being converged to the light-converging path 40 by the light-converging component 20, so as to further enhance the detection accuracy of the ambient-light intensity detector 100.

Optionally, in an alternative mode of the light-uniforming component 10 of the preferred embodiment, the light-outletting surface 14 of the light-uniforming component 10 are overlappedly attached to the light-entering surface 23 of the light-converging component 20 as illustrated, such that the one or more pending detection lights, emerging from the light-outletting surface 14 of the light-uniforming component 10, directly enter the light-converging component 20 from its light-entering surface 23.

In addition, referring to Figs. 1-4, in this preferred embodiment of the ambient-light intensity detector 100 of the present invention, the ambient-light intensity detector 100 further comprises an enclosing 50 comprising a tubular housing 51, wherein the housing 51 has an upper end 511, an opposing lower end 512 and a receiving cavity 513 extended from the lower end 512 to the upper end 511. As shown in the Figs. 1 to 4 of the drawings, the light-uniforming component 10, the light-converging component 20 and the photosensitive element 30 are installed to retain within the receiving cavity 513 of the housing 51 along a longitudinal direction of the housing 51 to define a detection environment 102 within the tubular housing 51 in order to avoid any interference of the external light to the detection result of the ambient-light intensity detector 100.

More specifically, the light-uniforming component 10 is retained in the receiving cavity 513 of the housing 51 by mounting and supporting the sidewall of the light-uniforming component 10 with the inner wall of the housing 51 while the light-inletting surface 13 of the light-uniforming component 10 facing the outside of the housing 51. The light-converging component 20 is retained in the receiving cavity 513 of the housing 51 by mounting and supporting the sidewall of the light-converging component 20 by the inner wall of the housing 51. The photosensitive element 30 is suspendedly retained in the receiving cavity 513 of the housing 51 with its photosensitive surface 31 facing to the light-emerging surface 24 of the light-converging component 20, wherein a central axis 201 of the light-converging component 20 extended through a center of the photosensitive surface 31 of the photosensitive element 30. When the ambient-light intensity detector 100 is detecting the intensity of the ambient light, external light is blocked from entering the receiving cavity 513 of the housing 51 by the surrounding wall of the housing 51, wherein ambient light can only enters into the receiving cavity 513 of the housing 51 through the light-inletting side 11 of the light-uniforming component 10, such that the photosensitive surface 31 of the photosensitive element 30 is only allowed to receive and detect the one or more pending detection lights converged to the light-converging path 40 by the light-converging component 20, so as to avoid the interference of the external light to the detection accuracy of the ambient-light intensity detector 100.

According to this preferred embodiment of the present invention, referring to Figs. 1-4, the ambient-light intensity detector 100 further comprises a circuit board 60 mounted and retained in the receiving cavity 513 of the housing 51 in a suspending manner, wherein the photosensitive element 30 is mounted to the circuit board 60 so as to be suspendedly retained in the receiving cavity 513 of the housing 51.

Preferably, the circuit board 60 is extended in a direction consistent with the longitudinal direction of the housing 51, that is the circuit board 60 is extended along the longitudinal direction of the housing 51 while the plane defined by the photosensitive surface 31 of the photosensitive element 30 is perpendicular to the extending direction of the circuit board 60. In other words, the photosensitive surface 31 of the photosensitive element 30 is perpendicular to the circuit board 60, such that the photosensitive surface 31 of the photosensitive element 30 is able to face towards the light-emerging surface 24 of the light-converging component 20. Alternatively, the extending direction of the circuit board 60 is perpendicular to the longitudinal direction of the housing 51 and the photosensitive element 30 is attached on the circuit board 60 in such a manner that the plane defined by the photosensitive surface 31 of the photosensitive element 30 is parallel to the extending direction of the circuit board 60, such that the photosensitive surface 31 of the photosensitive element 30 and the light-emerging surface 24 of the light-converging component 20 are parallel in face to face manner.

The housing 51 further comprises a cover 52 having a through hole 521, wherein the receiving cavity 513 of the housing 51 is thoroughly extended from the lower end 512 to the upper end 511 of the housing 51, wherein after the circuit board 60 is installed in the receiving cavity 513 of the housing 51, the cover 52 is mounted in the receiving cavity 513 of the housing 51 to cover and enclose an upper opening at the upper end 511 of the receiving cavity 513 of the housing 51 and an electric wiring is fittingly passed through the through hole 521 of the cover 52 and extended into the receiving cavity 513 of the housing 51 to electrically link the circuit board 60 with a power source, an electrical terminal or a predetermined apparatus that the detection result of the ambient-light intensity detector 100 is required.

Furthermore, the housing 51 has at least two opposing engaging slots 514 formed in the surrounding wall of the housing 51 at the upper end 511 thereof and communicating with the receiving cavity 513 with outside. The cover 52 further comprises a cover body 522, at least two opposing mounting arms 523 extended from the cover body 522, and at least two engaging protrusions 524 protruded from free ends of the mounting arms 523 respectively. The cover 52 is installed at the upper end 511 of the housing 51 by inserting the cover 52 into the upper opening of the receiving cavity 513 of the housing 51 and engaging the two engaging protrusions 524 of the mounting arms 523 of the cover 52 into the two engaging slots 514 of the housing 51 respectively and automatically due to the elasticity of the mounting arms 523, so as to enclose the upper opening of the receiving cavity 513 of the housing by the cover 52.

As shown in the Figs. 1 to 4 of the drawings, the enclosure 50 further comprises a first installing ring 53 and a second installing ring 54, wherein threads are formed at the inner walls of the first installing ring 53 and the second installing ring 54. Accordingly, the housing 51 has a thread portion provided at the outer surrounding wall thereof, wherein the first installing ring 53 is mounted on the housing 51 by engaging the threads at the inner wall thereof with the thread portion at the outer surrounding wall of the housing 51. Similarly, the second installing ring 54 is mounted at the housing 51 by engaging the threads of the inner wall thereof with the thread portion at the outer surrounding wall of the housing 51 too. Therefore, the first installing ring 53 and the second installing ring 54 can incorporated with each other for installing the ambient-light intensity detector 100 to a stationary fixture.

For example, the stationary fixture can be a ceiling which has an installing hole, wherein the diameter of the outer surrounding wall of the housing 51 is no less than the diameter of the stationary fixture, wherein the diameters of the outer walls of the first installing ring 53 and second installing ring 54 are larger than the diameter of the stationary fixture. During mounting the ambient-light intensity detector 100 to the stationary fixture, the second installing ring 54 is firstly mounted on the housing 51, then the upper end 511 of the housing 51 is aligned with and passes through the installing hole of the stationary fixture, and then the first installing ring 53 is mounted on the housing 51 thirdly. As such, the ambient-light intensity detector 100 is installed to the stationary fixture in a manner that the stationary fixture is sandwichedly supported by the first installing ring 53 and second installing ring 54 mounted at two sides of the stationary fixture.

Alternatively, the first installing ring 53 can be integrally formed on the housing 51, while the second installing ring 54 is mounted on the housing 51 via a threaded joint means, or that the first installing ring 53 is mounted on the housing 51 via the threaded joint means while the second installing ring 54 is integrally formed on the housing 51, according to an alternative mode of the preferred embodiment of the present invention.

In addition, referring to Figs. 1-4, according to the preferred embodiment of the present invention, the ambient-light intensity detector 100 further comprises a controller 70, wherein the photosensitive element 30 is controllably connected to the controller 70, wherein the controller 70 has a plurality of preset control scales for controlling the detecting values of the photosensitive element 30. In other words, the plurality of preset control scales of the controller 70 are corresponding to the detecting values of the photosensitive element 30 respectively, that is the preset control scales of the controller 70 have a one-to-one mapping relationship with the detecting values of the photosensitive element 30.

According to the preferred embodiment of the present invention, by configuring the plurality of preset control scales, the ambient-light intensity detector 100 is enabled to maintain the consistence of the detecting values of the photosensitive element 30 when the controller 70 is adjusted to the same preset control scale in different time periods, thereby enhancing the controllability of the ambient-light intensity detector 100. For example, the preset control scales of the controller 70 comprises "0-control scale", "1-control scale", "2-control scale", "3-control scale", "4-control scale", "5-control scale", "6-control scale", "7-control scale", "8-control scale", "9-control scale", "A-control scale", "B-control scale", "C-control scale", "D-control scale", "E-control scale", and "F-control scale", wherein when the controller 70 is adjusted from the "A-control scale" to any other control scale and then returned back to the "A-control scale", the detecting value of the photosensitive element 30 remains the same while being at the "A-control scale" twice, such that the controllability of the ambient-light intensity detector 100 is enhanced.

Accordingly, according to the preferred embodiment of the present invention, by configuring the plurality of preset control scales by the controller 70, the ambient-light intensity detector 100 is able to maintain the consistence of the detecting values of the photosensitive element 30, so as to enhance the controllability of the ambient-light intensity detector 100. For instance, when two ambient-light intensity detectors 100 are utilized in the use environment, after the controllers 70 of the two ambient-light intensity detectors 100 are both adjusted to the "A-control scales", the detecting values of the two photosensitive elements 30 are set to be equal with each other, so that the controllability of the ambient-light intensity detectors 100 are enhanced.

Preferably, the controller 70 is embodied as a coding switch, such as a BDC coding switch, adapted to selectively switch among the plurality of preset control scales for adjusting the controller 70. For example, the controller 70 is embodied as a coding switch comprising a plurality of resistor bodies according to one embodiment of the ambient-light intensity detector 100, wherein the controller 70 is configured with the plurality of preset control scales by selecting or adjusting the resistance of different resistor bodies and coding the detecting values corresponding to the combination resistance of different resistor bodies of the BCD coding switch, such that the error of the controller 70 can be reduced effectively. The controller 70 comprises a control-scale selector 71 for actuating and switching between the different preset control scales of the controller 70 so as to adjust the detecting value of the photosensitive element 30.

Preferably, the control-scale selector 71 is embodied as a rotation selector so as to minimize the size of the controller 70. For example, the control-scale selector 71 has an indented groove 711 for enabling an actuation device to insert in the indented groove 711 and control the control-scale selector 71. Selectively, the control-scale selector 71 can be driven by a driving unit such as a motor.

Furthermore, the housing 51 has an installing slot 515 formed at the surrounding wall of the housing 51 at the lower end 512 thereof, wherein the installing slot 515 is communicated with the receiving cavity 513. The controller 70 is attached to the circuit board 60 and extends outwardly from the receiving cavity 513 of the housing 51 to install within the installing slot 515 of the housing 51, such that the circuit board 60 is retained in the receiving cavity 513 of the housing 51. After the controller 70 is installed in the housing, the control-scale selector 71 of the controller 70 is exposed to outside of the housing 51, adapted for allowing the plurality of preset control scales of the controller 70 being actuated and selected for adjusting the detecting values of the photosensitive element 30.

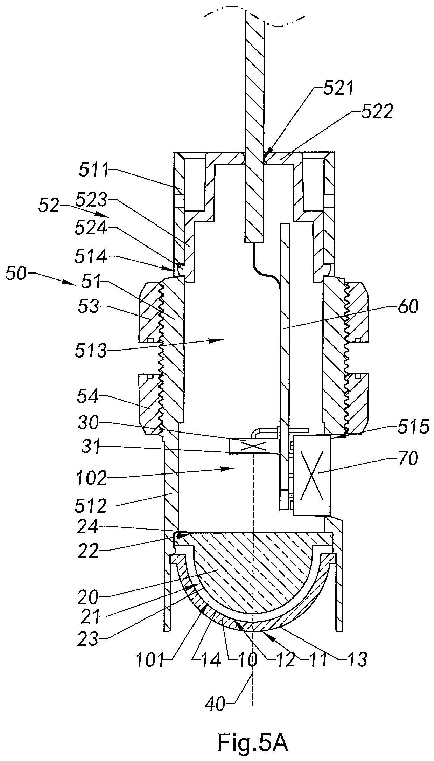

According to an alternative mode of the preferred embodiment of the ambient-light intensity detector 100 as shown in Fig. 5A, the light-converging component 20 is embodied as a converging lens (plano-convex lens), wherein the detection light is converged to the light-converging path 40 via the light-converging component 20 when the detection light passes through the light-converging component from its light-entering surface (convex surface) 23 to the light-emerging surface (flat surface) 24, and is received by the photosensitive element 30 at the photosensitive surface 31 thereof. Alternatively, the light-converging component 20 can be embodied as a combined converging lens. In other words, the light-converging component 20 may comprises two or more converging lenses, wherein a gap may be formed between each two adjacent converging lenses or each two adjacent converging lenses, or that the two adjacent converging lenses are overlappedly attached with each other.

Referring to the Fig. 5A of the drawings, the light-entering surface 23 of the light-converging component 20 is embodied as a convex light-entering surface and the light-emerging surface 24 of the light-converging component 20 is embodied as a flat light-emerging surface for converging the detection light to the light-converging path 40. Correspondingly, the light-inletting surface 13 of the light-uniforming component 10 is embodied as a convex light-inletting surface and the light-outletting surface 14 of the light-uniforming component 10 is a concave light-outletting surface in such a manner that the light-uniforming component 10 and the light-converging component 20 are matched with each other in shape and size correspondingly as shown in Fig. 5A.

Preferably, the curvature of the light-inletting surface 13 and the curvature of the light-outletting surface 14 of the light-uniforming component 10 are consistent with the curvature of the light-entering surface 23 of the light-converging component 20, such that the cross sections of the light-converging component 20 and the light-uniforming component 10 at any position along an axial direction are in centrosymmetric shape where their centers are located at the central axis 201 of the light-converging component 20. Accordingly, the reflection light around the ambient-light intensity detector 100 is able to pass through the light-uniforming component 10 nonselectively and undistinguishably to form the pending detection light, and that the pending detection light is able to be converged to the light-converging path 40 by the light-converging component 20 nonselectively and undistinguishably, such that the accuracy of the ambient-light intensity detector 100 can be improved.

In addition, the ambient-light intensity detector 100 has a gap 101 provided between the light-outletting surface 14 of the light-uniforming component 10 and the light-entering surface 23 of the light-converging component 20. In other words, the gap 101 of the ambient-light intensity detector 100 is defined between the light-outletting surface 14 of the light-uniforming component 10 and the light-entering surface 23 of the light-converging component 20, such that the pending detection light emitted from the light-outletting surface 14 propagates through the gap 101 and enters the light-converging component 20 from its light-entering surface 23, wherein gas (such as, but not limited to, air) is retained in the gap 101 for reducing energy-loss of the detection during the light is converged to the light-converging path 40 by the light-converging component 20. Therefore, the accuracy of the light intensity detected by the ambient-light intensity detector 100 can further be improved.

Alternatively, the light-outletting surface 14 of the light-uniforming component 10 is overlappedly attached to the light-entering surface 23 of the light-converging component 20. In other words, there is no gap 101 formed between the light-outletting surface 14 of the light-uniforming component 10 and the light-entering surface 23 of the light-converging component 20.

Furthermore, the light-uniforming component 10 is provided in front of the light-entering surface 23 of the light-converging component 20. In other words, the light-converging component 20 is installed first, and then the light-uniforming component 10 is installed by attaching to the light-entering surface 23 of the light-converging component 20 to avoid the gap 101 being formed between the light-outletting surface 14 of the light-uniforming component 10 and the light-entering surface 23 of the light-converging component 20.

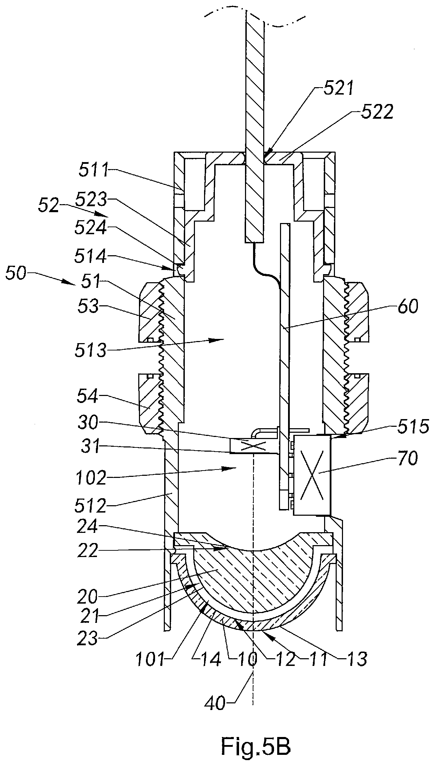

Referring to the Fig. 5B of the drawings, another alternative mode of the ambient-light intensity detector 100 is illustrated, wherein the structure and configuration of the ambient-light intensity detector 100 in this alternative mode is similar to that as shown in the Fig. 5A, except that the light-emerging surface 24 of the light-converging component 20 is embodied as a concave light-emerging surface, and the curvature of the light-emerging surface 24 of the light-converging component 20 is smaller than that of the light-entering surface 23 of the light-converging component 20 for allowing the detection light being converged to the light-converging path 40 through the light-converging component 20.

In other words, as shown in Fig. 5B, the light-inletting surface 13 of the light-uniforming component 10 is embodied as a convex surface and the light-outletting surface 14 of the light-uniforming component 10 is embodied as a concave surface, while the light-entering surface 23 of the light-converging component 20 is a embodied as convex surface and the light-emerging surface 24 of the light-converging component 20 is embodied as a concave surface. The curvature of the light-entering surface 23 of the light-uniforming component 10 is consistent with the curvature of the light-outletting surface 14 of the light-uniforming component 10 and the curvature of the light-entering surface 23 of the light-converging component 20, while the curvature of the light-emerging surface 24 of the light-converging component 20 is smaller than the curvature of the light-entering surface 23 of the light-converging component 20.

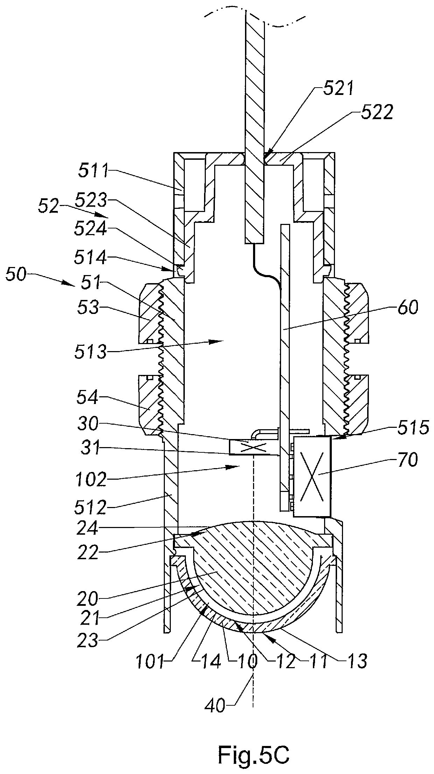

Referring to the Fig. 5C of the drawings, another alternative mode of the ambient-light intensity detector 100 is illustrated, wherein the structure and configuration of the ambient-light intensity detector 100 in this alternative mode is similar to that as shown in the Fig. 5A, except that the light-emerging surface 24 of the light-converging component 20 is a embodied as convex surface. I n other words, the light-inletting surface 13 of the light-uniforming component 10 is embodied as a convex surface and the light-outletting surface 14 of the light-uniforming component 10 is embodied as a concave surface, while the light-entering surface 23 of the light-converging component 20 is a convex light-entering surface and the light-emerging surface 24 of the light-converging component 20 is a convex light-emerging surface.

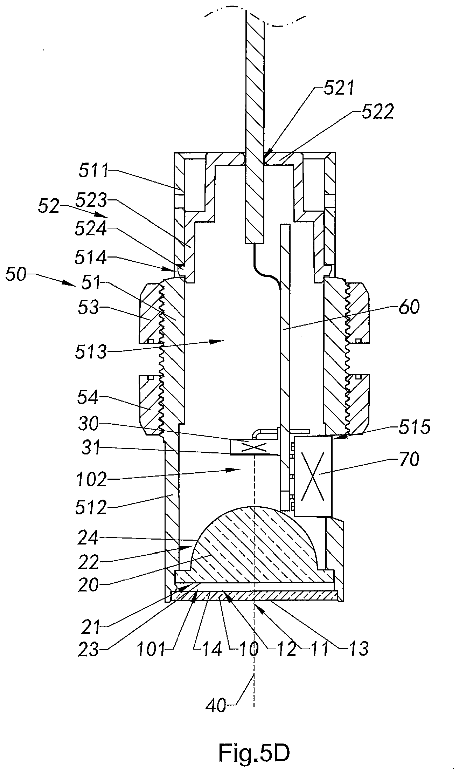

Referring to the Fig. 5D of the drawings, the light-inletting surface 13, another alternative mode of the ambient-light intensity detector 100 is illustrated, wherein the structure and configuration of the ambient-light intensity detector 100 in this alternative mode is similar to that as shown in the Fig. 5A, except that the light-outletting surface 14 of the light-uniforming component 10 and the light-entering surface 23 of the light-converging component 20 are flat surfaces, while the light-emerging surface 24 of the light-converging component 20 is a convex surface, such that the pending detection light, after emerging out from the light-outletting surface 14 of the light-uniforming component 10, is converged to the light-converging path 40 through the light-converging component 20.

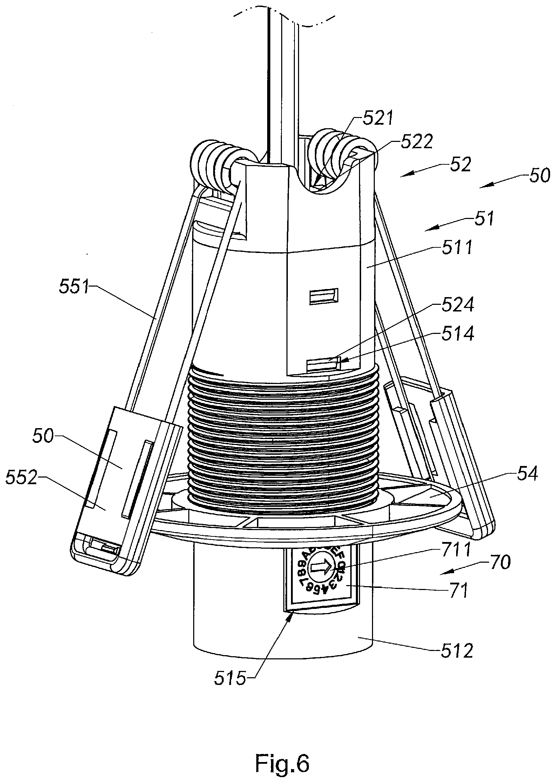

Referring to the Fig. 6 of the drawings, another alternative mode of the ambient-light intensity detector 100 is illustrated, wherein the structure and configuration of the ambient-light intensity detector 100 in this alternative mode is similar to that as shown in the Figs. 1-4, except that no first installing ring 53 is provided at the enclosure 50. More specifically, the enclosure 50 comprises the second installing ring 54 and two installing arms 55, wherein the second installing ring 54 is installed on the housing 51 in such a manner that the threads of the inner wall of the second installing ring 54 are engaged with the threads of the outer wall of the housing 51. Each of the installing arms 55 has an installing end 551 and an opposed free end 552, wherein two installing arms 44 are mounted at two sides of the housing 51 symmetrically in such a manner that the installing end 551 of each of the installing arms 55 is mounted on the housing 51 at the lower end 512 thereof. A sandwiching space is formed between the two installing arms 55 and the second installing ring 54 so as to sandwich the stationary lighting fixture. Preferably, the installing end 551 of each of the installing arms 55 is mounted with a torsional-spring installing end for decreasing a size of the clamping space so as to securely retain the stationary lighting fixture in position.

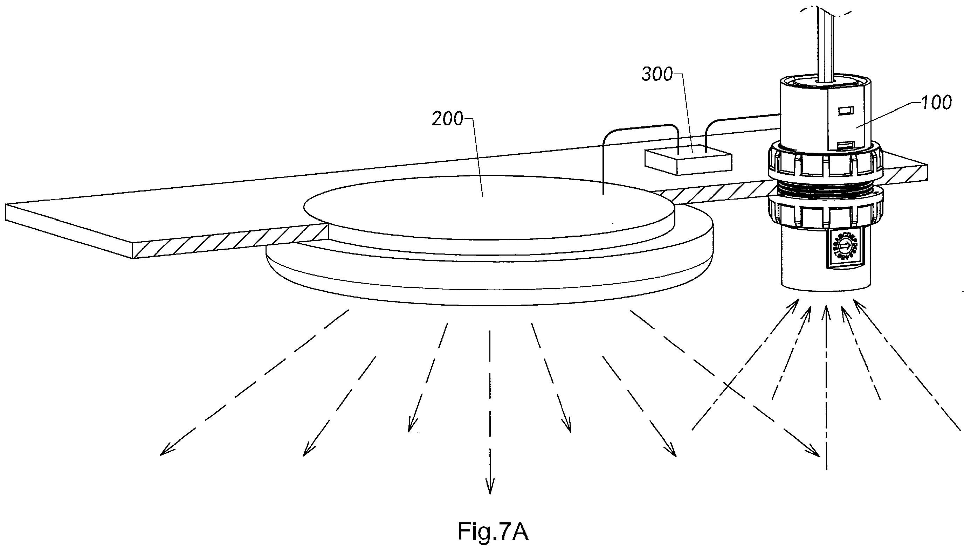

Referring to the Fig. 7A of the drawings, a constant light system is illustrated, wherein the constant light system comprises an ambient-light intensity detector 100, one or more lighting fixtures 200 and a control system 300. The ambient-light intensity detector 100 and the lighting fixtures 200 are electrically connected with the control system 300, wherein the control system 300 is configured to selectively control the lighting fixtures 200 according to the detection result of the ambient-light intensity detector 100. For example, the control system 300 is able to control the luminous intensity of the lighting fixtures 200 based on the detection result of the ambient-light intensity detector 100, so as to maintain a constant ambient-light intensity in the use environment.

According to the preferred embodiment of the present invention, the ambient-light intensity detector 100 and the lighting fixtures 200 may be installed adjacent with each other at a ceiling, so as to retain the ambient-light intensity detector 100 and the lighting fixtures 200 in the use environment.

It is worth mentioning that the type of the control system 300 is not intended to be limiting the scope of the present invention. For example, the control system 300 may be embodied, but not limited to, a CPU (Central Processing Unit) installed at or being supported by the ceiling of the use environment so as to be retained in the use environment Alternatively, the control system 300 may not be retained in the use environment but arranged to receive the signal of the detection result of the ambient-light intensity detector 100 and send the control command to the lighting fixtures 200 through a communication network or other communication means, so as to control the illuminating condition of the one or more lighting fixtures 200 according to the detection result of the ambient-light intensity detector 100.

Those skilled in the art would understand that the control system 300 is paired with the ambient-light intensity detector 100. For example, when the controller 70 comprises a MCU (Microprogrammed Control Unit), such as a BDC code switch having a MCU, the control system 300 is configured as a controlling arrangement comprising a control interface such as PWM, 0/1-10V, DALi, I² C and so on, and that when the controller 70 is configured as a 0/1-10V controlling arrangement, the control system 300 is embodied as a controlling arrangement comprising a 0/1-10V control interface correspondingly. When the constant light system is electrically powered, the ambient-light intensity detector 100 detects to the ambient light intensity in the use environment continuously, wherein the controller 70 is arranged to send different control command signals based on the detection results obtained by the ambient-light intensity detector 100 and the control system 300 adjusts the luminous intensity of the lighting fixtures 200 according to the control command signals from the control system 300, wherein when the detection result of the ambient-light intensity detector 100 is lower than the preset detecting value of the controller 70, the one or more lighting fixtures 200 are adjusted to be brighter correspondingly. Instead, when the detection result of the ambient-light intensity detector 100 is greater than the preset detecting value of the controller 70, the one or more lighting fixtures 200 are adjusted to be dimmer correspondingly. Accordingly, when the intensity of the pending detection light changes, being stronger or weaker, the control system 300 is able to adjust the luminous intensity of the one or more lighting fixtures 200 in accordance with the detection results of the ambient-light intensity detector 100 in a dynamic compensation manner so as to maintain a constant intensity of the ambient light in the use environment corresponding to the detecting value of the preset control scale.

Furthermore, it should not be limited in the scope of the present invention that whether the detecting value is correspondingly adjusted and preset by actuating a sliding potentiometer in a stepless manner directly or through selecting a resistance from different resistor bodies and a combination resistance of multiple resistors by actuating a dial coding switch. In other words, the controller 70 can be arranged as the sliding potentiometer for selecting different detecting values by adjusting to different resistance scale in a stepless manner, or be arranged as the dial coding switch for precisely selecting different detecting values by selecting different coding combinations of different resistors. In other words, the selection of different detecting values may be completed by other coding combination methods known in the art. For instance, the different detecting values may be selectively adjusted by the corresponding preset control scales generated in the MCU by the combination of the different I/0 control interfaces thereof. Alternatively, the different detecting values may also be selectively adjusted by the values generated in the MCU and mapping with the corresponding detecting values, such that the selection of the detecting values can be implemented by a combination of the different I/0 control interfaces and the corresponding control command is outputted for transmission via a wireless network or other communication means, which is not intended to be limiting in the present invention.

In other words, the controller 70 is arranged to provide a plurality of control scales corresponding to a plurality of detecting values respectively, wherein the correspondence relationship between each of the control scales and the detecting values is not intended to be limiting in the present invention. In one example, the controller 70 is able to be configured to adjust the detecting values in a stepless manner (i.e. the controller 70 is embodied as a sliding potentiometer) that the number of the preset control scales is not limited and the preset control scales corresponding to the detecting values are in functional relationship respectively. In one example, the controller 70 is able to be configured to adjust the detecting values in a level-to-level manner that the preset control scales corresponding to the detecting values are in list relationship respectively. For example, when the controller 70 is embodied as a dial coding switch, the different detecting values are selectively adjusted by switching the dial coding switch to different resistance positions corresponding to coding combination of different resistors in a level-to-level manner. When the controller 70 is embodied as a BDC coding switch comprising a plurality of resistors, and the different detecting values are selectively adjusted by selecting one or combining a group of different resistors. When the controller 70 is embodied as a MCU, the different detecting values are selectively adjusted by providing a preset control scale which is corresponding to a particular detecting value through the I/0 control interfaces of the MCU. The preset control scale is communicatively transmitted to the controller 70 to control the controller 70 to select a different detecting value in a remote control manner or by a preset control algorithm, which is not intended to be limiting in the present invention.

It is worth mention that the control system 300 is integrated in the ambient-light intensity detector 100 in some examples according to the preferred embodiment of the present invention.

During the installation of the ambient-light intensity detector 100 in the use environment, the detecting range of the ambient-light intensity detector 100 can be selectively adjusted by changing a distance between the photosensitive surface 31 of the photosensitive element 30 of the ambient-light intensity detector 100 and the light-emerging surface 24 of the light-converging component 20, so as to ensure the detecting range of the ambient-light intensity detector 100 matching with and being suitable to the corresponding use environment.

In addition, during the installation of the ambient-light intensity detector 100 in the use environment, the preset control scales of the controller 70 is selectively adjusted to adjust the detecting values of the photosensitive element 30 correspondingly, while the detecting values of the photosensitive element 30 are associated with the ambient-light intensity of the use environment. In other words, the detecting values of the photosensitive element 30 are corresponding to the different expected ambient light intensities of the use environment desired by a user.

According to the constant light system of the present invention, the ambient-light intensity detector 100 is able to detect the light intensity of the use environment in real-time, wherein the luminous intensity of the lighting fixtures 200 is dimmed in responsive to the detected ambient light intensity by the ambient-light intensity detector 100 that is greater than the expected detecting value of the use environment, wherein the luminous intensity of the lighting fixtures 200 is increased automatically in responsive to detected ambient light intensity by the ambient-light intensity detector 100 that is lower than the expected detecting value of the use environment. Accordingly, the ambient-light intensity of the use environment can always be maintained in constant.

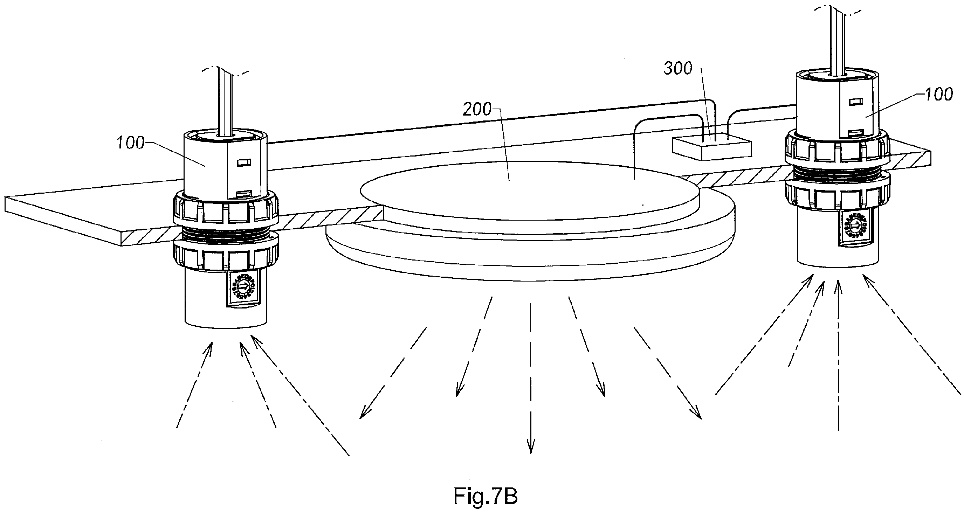

Referring to the Fig. 7B of the drawings, a constant light system is illustrated, wherein the constant light system comprises a plurality of ambient-light intensity detectors 100, a lighting fixture 200 and a control system 300, wherein each of the ambient-light intensity detectors 100 and the lighting fixture 200 are electrically connected with the control system 300, and the plurality of ambient-light intensity detectors 100 are installed at different positions of the use environment. The constant light system is able to detect a real ambient light intensity of the use environment by the plurality of ambient-light intensity detectors 100 at different positions of the use environment.

In order to enable the detection of a real ambient light intensity of the use environment, the detecting values of the photosensitive element 30 of the ambient-light intensity detectors 100 are required to be unified after the ambient-light intensity detectors 100 are installed in the use environment. The controller 70 of each of the ambient-light intensity detectors 100 of the constant light system of the present invention has a plurality of preset control scales, wherein the preset control scales of each of the controllers 70 are paired with the detecting values of the photosensitive elements 30 respectively and correspondingly, such that after the ambient-light intensity detectors 100 are installed in the use environment, the controllers 70 of the ambient-light intensity detectors 100 are adjusted to the same preset control scale so as to unify the detecting values of the photosensitive elements 30 of the ambient-light intensity detectors 100, so as to ensure each of the ambient-light intensity detectors 100 detecting the real light intensity in the use environment.

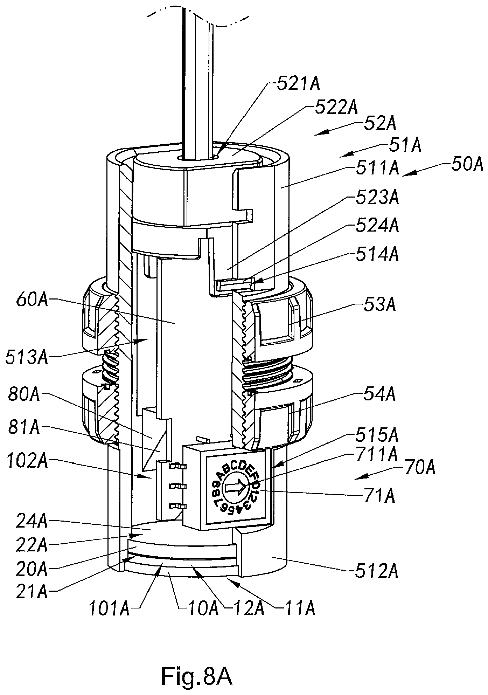

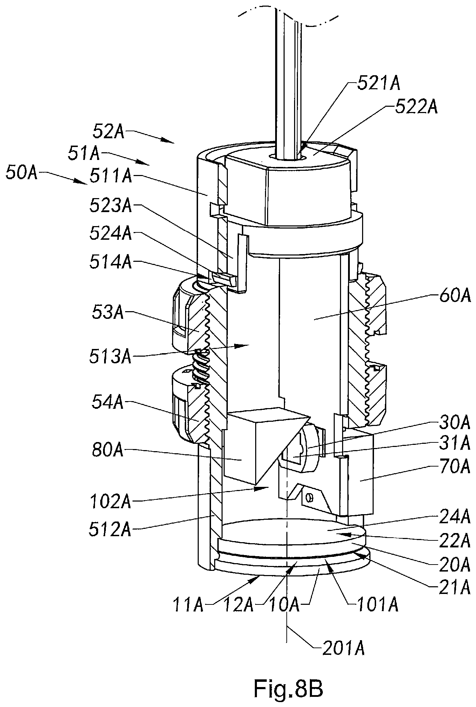

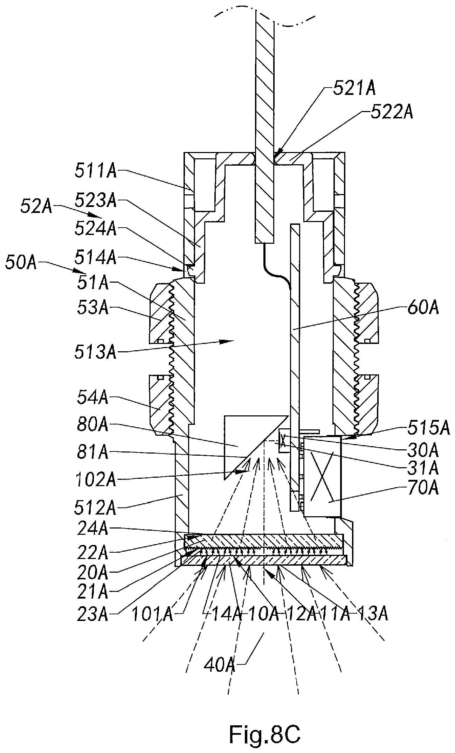

Referring to the Fig. 8A to Fig. 8C, an ambient-light intensity detector 100A according to a second preferred embodiment of the present invention is illustrated, wherein the ambient-light intensity detector 100 comprises a light-uniforming component 10A, a light-converging component 20A, a photosensitive element 30A, and a light-deflecting component 80A, wherein the light-converging component 20A defines a light-converging path 40A. The light-uniforming component 10A is retained in the light-converging path 40A defined by the light-converging component 20A and configured to uniformly and evenly mix the reflection lights reflected from one or more objects in a use environment (where the ambient-light intensity detector 100A is applied) to form a pending detection light while the reflection lights passing through the light-uniforming component 10A. The light-converging component 20A is configured to converge the pending detection light to the light-converging path 40A. The light-deflecting component 80A is arranged in the light-converging path 40A such that the propagation direction of the pending detection light can be changed in direction by means of the light-deflecting component 80A after being converged to the light-converging path 40A by the light-converging component 20A. According to the second preferred embodiment of the present invention, the light-deflecting component 80A is configured for deflecting the light-converging path 40A at 90 degrees, such that the pending detection light, which is converged to the light-converging path 40A by the light-converging component 20A, continues to propagate after being deflected for 90 degrees. The photosensitive element 30A has a photosensitive surface 31A retained in the light-converging path 40A defined by the light-converging component 20A and is configured to receive the detection light after being converged to the light-converging path 40A by the light-converging component 20A and deflected by the light-deflecting component 80A. The received detection light is then processed by the photosensitive element 30A to detect the light intensity of the ambient-light in the use environment.

Accordingly, the ambient-light intensity detector 100A is configured to uniformly and evenly mix the reflection lights reflected from one or more objects in the use environment through the light-uniforming component 10A, such that the reflection lights lose their original propagation directions and form the pending detection light. Accordingly, the reflection lights reflected from the one or more objects are virtualized and the adverse effects to the detection accuracy caused by different surface reflectances of the one or more objects in the use environment can be reduced.

The ambient-light intensity detector 100A is able to increase its detection range by converging and/or gathering the pending detection light to the light-converging path 40A through the light-converging component 20A, so as to enable the reflection lights reflected from more different types of objects passing through the light-uniforming component 10A. Accordingly, the adverse effects to the detection accuracy caused by different surface reflectances of the objects in the use environment can be further reduced.

As shown in the Figs. 8A to 8C of the drawings, the light-converging component 20A of the ambient-light intensity detector 100A is embodied as a light transmitting lens element which is capable of refracting and converging the pending detection light to the light-converging path 40A after the pending detection light passes through the light-converging component 20A. Accordingly, the light-converging component 20A has an light entering side 21A and an opposing light-emerging side 22A, wherein the light-uniforming component 10A is retained in the light-converging path 40A at the light entering side 21A of the light-converging component 20A, wherein the light-deflecting component 80A is retained in the light-converging path 40A at the light-emerging side 22A and the photosensitive surface 31A of the photosensitive element 30 is retained in the light-converging path 40A so as to ensure the reflection lights from one or more objects in the use environment being uniformly and evenly mixed by the light-uniforming component 10A to form the pending detection light which is converged to the light-converging path 40A after passing through the light-converging component 20A and deflected by the light-deflecting component 80A for being received by the photosensitive surface 31A of the photosensitive element 30A.

Preferably, the light-converging component 20A is embodied as a Fresnel lens that the thickness and the manufacturing cost of the ambient-light intensity detector 100A can be reduced. More specifically, the light-converging component 20A has a light-entering surface 23A and an opposing light-emerging surface 24A, wherein the light-entering surface 23A of the light-converging component 20A is a side surface of the light entering side 21A of the light-converging component 20 and has a plurality of protrusion tooth ripples in concentric circles. Correspondingly, the light-emerging surface 24A of the light-converging component 20A is a side surface of the light-emerging side 22A of the light-converging component 20A, wherein the light-emerging surface 24A is a flat light-emerging surface. Accordingly, the pending detection light which enters the light-converging component 20A from the light-entering surface 23A of the light-converging component 20A and emerges from the light-emerging surface 24A of the light-converging component 20A is converged to the light-converging path 40A.

Furthermore, the light-converging component 20A has a central axis 201A, wherein the cross section of the light-converging component 20A at any position along its axial direction is in a centrosymmetric shape and the symmetric center of which is located in the central axis 201A of the light-converging component 20A. Accordingly, the pending detection light formed from the ambient lights around the ambient-light intensity detector 100A can be refracted and converged to the light converge path 40A through the light-converging component 20A nonselectively and undistingishably, such that the accuracy of the intensity of the light in the use environment being detected by the ambient-light intensity detector 100A can be enhanced.

Preferably, the cross section of the light-uniforming component 10A at any position along its axial direction is in a centrosymmetric shape and the symmetric center of which is located in the central axis 201A of the light-converging component 20A. Accordingly, the reflection lights around the ambient-light intensity detector 100A can pass through the light-uniforming component 10A nonselectively and undistinguishably for being uniformly and evenly mixed to from the pending detection light.

Referring to the Fig. 8A-8C of the drawings, the light-uniforming component 10A has a light-inletting side 11A and an opposing light-outletting side 12A corresponding to the light-inletting side 11A, wherein the light-uniforming component 10A is retained in the light-converging path 40A defined by the light-converging component 20A while the light-outletting side 12A of the light-uniforming component 10A faces the light entering side 21A of the light-converging component 20A, so as to ensure the reflection lights reflected from the one or more objects in the use environment firstly entering the light-uniforming component 10A from its light-inletting side 11A and emerging from its light-outletting side 12A, so that the reflection lights are uniformly and evenly mixed and/or diffused by the light-uniforming component 10A to form the pending detection light. Then, the pending detection light enters the light-converging component 20A from its light entering side 21A and emerges from its light-emerging side 22A, wherein the detection light is refracted and converged to the light-converging path 40A through the light-converging component 20A.

Furthermore, the light-uniforming component 10A has a light-inletting surface 13A and an opposing light-outletting surface 14A corresponding to the light-inletting surface 13A, wherein the light-inletting surface 13A is a side surface of the light-inletting side 11A of the light-uniforming component 10A and, correspondingly, the light-outletting surface 14A of the light-uniforming component 10A is a side surface of the light-outletting side 12A of the light-uniforming component 10A. Accordingly, the reflection lights reflected from the one or more objects in the use environment enter the light-uniforming component 10A from its light-inletting surface 13A and emerge from its light-outletting surface 14A to form the pending detection light.

It is worth mentioning that the type of the light-inletting surface 13A and the light-outletting surface 14A of the light-uniforming component 10A is not intended to be limiting in the ambient-light intensity detector according to the preferred embodiment of the present invention. For example, both of the light-inletting surface 13A and the light-outletting surface 14A of the light-uniforming component 10A can be embodied as smooth surfaces or rough surfaces. Alternatively, one of the light-inletting surface 13A and the light-outletting surface 14A is a smooth surface and the other is a rough surface.

It is worth mentioning that, although the light-inletting surface 13A and the light-outletting surface 14A of the light-uniforming component 10A of the ambient-light intensity detector 100A are embodied as flat surfaces as an example shown in the Figs. 8A to 8C of the drawings according to the preferred embodiment, those who skilled in the art would understand that the description and features of the ambient-light intensity detector 100A in this preferred embodiment as shown in the Figs. 8A to 8C are not intended to limit the scope of the ambient-light intensity detector 100A of the present invention. In other examples, both the light-inletting surface 13A and the light-outletting surface 14A of the light-uniforming component 10A of the ambient-light intensity detector 100A can be embodied as arc surfaces, such as either convex arc surface or concave arc surface. Alternatively, one of the light-inletting surface 13A and the light-outletting surface 14A of the light-uniforming component 10A is embodied as a convex surface while the other is embodied as a concave surface.

Referring to the Figs. 8A to 8C of the drawings, a gap 101A is formed between the light-outletting surface 14A of the light-uniforming component 10A and the light-entering surface 23A of the light-converging component 20A. In other words, the ambient-light intensity detector 100A has the gap 101A defined between the light-uniforming component 10A and the light-converging component 20A. Accordingly, the pending detection light, exiting from the light-outletting surface 14A of the light-uniforming component 10A, propagates in the gap 101A to enter the light-converging component 20A from its light-entering surface 23A, wherein gas, such as air, is retained in the gap 101A for reducing the energy-loss of the pending detection light when being converged to the light-converging path 40A through the light-converging component 20A, so as to enhance the detection accuracy of the intensity of the light detected by the ambient-light intensity detector 100A.

Alternatively, according to an alternative mode of the ambient-light intensity detector 100A of the present invention, the light-outletting surface 14A of the light-uniforming component 10A can be overlappedly attached to the light-entering surface 23A of the light-converging component, such that the pending detection light, emerging from the light-outletting surface 14A of the light-uniforming component 10A, directly enters the light-converging component 20A from its light-entering surface 23A.

Further referring to Fig. 8A to Fig. 8C of drawings of the present invention, the light-deflecting component 80A is a light reflective element which can change the radiating direction of the pending detection light in a reflecting manner. In particular, the light-deflecting component 80A has a deflecting surface 81A, wherein the light-emerging surface 24A of the light-converging component 20A faces the deflecting surface 81A of the light-deflecting component 80A to define a light-inlet path between the deflecting surface 81A of the light-deflecting component 80A and the light-emerging surface 24A of the light-converging component 20A, wherein the photosensitive surface 31A of the photosensitive element 30A is arranged to face the deflecting surface 81A of the light-deflecting component 80A so as to define an light-outlet path between the photosensitive surface 31A of the photosensitive element 30A and the deflecting surface 81A of the light-deflecting component 80A, wherein the pending detection light, which enters from the light-emerging surface 24A of the light-converging component 20A, is reflected by the deflecting surface 81A of the light-deflecting component 80A and then is deflected after being propagated to the deflecting surface 81A of the light-deflecting component 80A along the light-inlet path. Then, the deflected light is propagated along the light-outlet path for being received by the photosensitive surface 31A of the photosensitive element 30A.

Preferably, according to the ambient-light intensity detector 100A of this embodiment as illustrated in Figs. 8A to 8C, the light-emerging surface 24A of the light-converging component 20A is a flat light-emerging surface and the deflecting surface 81A of the light-deflecting component 80A is a flat reflecting surface, wherein the angle formed between the plane defined by the deflecting surface 81A of the light-deflecting component 80 and the plane defined by the light-emerging surface 24A of the light-converging component 20A is 45 degrees. Correspondingly, the angle defined between a plane defined by the deflecting surface 81A of the light-deflecting component 80 and the plane defined by the photosensitive surface 31A of the photosensitive element 30A is also 45 degrees, such that the pending detection light is deflected for 90 degrees by the light-deflecting component 80A.

Alternatively, according to an alternative mode of the preferred embodiment of the ambient-light intensity detector 100A, the deflecting surface 81A is an arc surface. For example, the deflecting surface 81A of the light-deflecting component 80A is a concave arc surface so as to further converge the pending detection light while the deflecting surface 81A is deflecting the pending detection light, or that the deflecting surface 81A of the light-deflecting component 80A is a convex arc surface so as to further converge the pending detection light while the deflecting surface 81A is deflecting the pending detection light.

Alternatively, according to other preferred embodiments of the ambient-light intensity detector 100A, the light-deflecting component 80A is a refractive element for deflecting the radiating direction of the pending detection light. In particular, the light-deflecting component 80A is retained at the out-light side 22A of the light-converging component 20A, wherein the light-inlet path is defined between the light-deflecting component 80A and the light-emerging surface 24A of the light-converging component 20A, and the light-outlet path is defined between the light-deflecting component 80A and the photosensitive surface 31A of the photosensitive element 30A, wherein the pending detection light, which emerges from the light-emerging surface 24A of the light-converging component 20A, is refracted and deflected after being propagated to the light-deflecting component 80A along the light-inlet path, and the deflected light is propagated along the light-outlet path so as to being received by the photosensitive surface 31A of the photosensitive element 30A.

For example, the light-deflecting component 80A is embodied as a prism adapted to change the propagation direction of the pending detection light by refraction. Or that, the light-deflecting component 80A can be embodied as a prism combination, which is also adapted to change the propagation direction of the pending detection light by refraction. Alternatively, the light-deflecting component 80A is embodied as a plane reflector adapted to change the propagation direction of the pending detection light by reflection.

Furthermore, referring to Figs. 8A to 8C, the ambient-light intensity detector 100A according to this preferred embodiment of the present invention comprises an enclosure 50A comprising a tubular housing 51A, wherein the housing 51A has an upper end 511A, an opposing lower end 512A and a receiving cavity 513A extending from the lower end 512A to the upper end 511A. The light-uniforming component 10A, the light-converging component 20A and the light-deflecting component 80A are retained within the receiving cavity 513A of the housing 51A along an axial direction defined in the housing 51A. The photosensitive element 30A is retained in the receiving cavity 513A of the housing 51A, wherein the housing 51A defines a detection environment 102A therein so as to avoid interference to the detection result of the ambient-light intensity detector 100A by external light.

More specifically, the light-uniforming component 10A is retained in the receiving cavity 513A of the housing 51A by mounting the sidewall of the light-uniforming component 10A to an inner wall of the housing 51A while the light-outletting surface 13A of the light-uniforming component 10A facing outside of the housing 51A. The light-converging component 20A is retained in the receiving cavity 513A of the housing 51A by mounting a sidewall of the light-converging component 20A to the inner wall of the housing 51A while the light entering side 21A of the light-converging component 20A facing the light-outletting side 12A of the light-uniforming component 10A. The light-deflecting component 80A is installed at the inner wall of the housing 51A while its deflecting surface 81A facing the light-emerging side 22A of the light-converging component 20A, such that a light-inlet path is defined between the deflecting surface 81A of the light-deflecting component 80A and the light-emerging surface 24A of the light-converging component 20A. The photosensitive element 30A is retained within the receiving cavity 513A of the housing 51A while the photosensitive surface 31A of the photosensitive element 30A faces the deflecting surface 81A of the light-deflecting component 80A, such that a light-outlet path is defined between the deflecting surface 81A of the light-deflecting component 80A and the photosensitive surface 31A of the photosensitive element 30A. During the detection of the intensity of the ambient light in the use environment by the ambient-light intensity detector 100A, external light is blocked from entering the receiving cavity 513A of the housing 51A by the surrounding wall of the housing 51A, so that only the light radiating towards the light-inletting side 11A of the light-uniforming component 10A is allowed to enter into the receiving cavity 513A of the housing 51A. Accordingly, the photosensitive surface 31A of the photosensitive element 30A is only allowed to receive and detect the pending detection light being converged to the light-converging path 40A through the light-converging component 20A, so as to avoid interference to the detection accuracy of the ambient-light intensity detector 100A by the external light.

Alternatively, according to an alternative mode of the ambient-light intensity detector 100A of the present invention, the light-deflecting component 80A and the housing 51A can be integrally formed. In other words, the deflecting surface 81A is integrally formed by a portion of the inner wall of the housing 51A.

Furthermore, referring to Figs. 8A to 8C, according to the preferred embodiment of the present invention, the ambient-light intensity detector 100A comprises a circuit board 60A retained within the receiving cavity 513A of the housing 51A, wherein the photosensitive element 30A is attached to the circuit board 60A and the photosensitive surface 31A of the photosensitive element 30A is arranged parallel to the circuit board 60A, such that the photosensitive element is retained in the receiving cavity 513A of the housing 51A.

Preferably, the circuit board 60A is extended in a direction consistent with the axial direction of the housing 51A, such that the circuit board 60A is extended along the axial direction of the housing 51A and the plane defined by the photosensitive surface 31A of the photosensitive element 30A is parallel to the extending direction of the circuit board 60A, so that an overlapped area between the photosensitive element 30A and the circuit board 60A can be increased so as to guarantee the stability of the position and angle of the photosensitive element 30A.

The housing 51A further comprises a cover 52A having a through hole 521A, wherein the receiving cavity 513A of the housing 51A is thoroughly extended from the lower end 512A to the upper end 511A of the housing 51A, wherein after the circuit board 60A is installed in the receiving cavity 513A of the housing 51A, the cover 52A is mounted in the receiving cavity 513A of the housing 51A to enclose an upper opening of the receiving cavity 513A of the housing 51A, wherein an electric wiring is extended into the receiving cavity 513A of the housing 51A through the through hole 521A of the cover 52A fittingly to electrically connect to circuit board 60A.

Furthermore, the housing 51A has at least two engaging slots 514A, formed in the surrounding wall of the housing 51A at the upper end 511A thereof, communicating with the receiving cavity 513A. The cover 52A further comprises a cover body 522A, at least two mounting arms 523A extended from the cover body 522A, and at least two engaging protrusions 524A protruded from free ends of the at least two mounting arms 523A respectively. The cover 52A is installed at the upper end 511A of the housing 51A by inserting the mounting arms 523A of the cover 52A into the upper opening of the receiving cavity 513A of the housing 51A and engaging the engaging protrusions 524A of the cover 52A into the engaging slots 514A of the housing 51A respectively and automatically due to the elasticity of the mounting arms 523A, so as to enclose the upper opening of the receiving cavity 513A of the housing by the cover 52A.

As shown in the Figs. 8A to 8C of the drawings, the enclosure 50A further comprises a first installing ring 53A and a second installing ring 54A, wherein threads are provided at the inner walls of the first installing ring 53A and second installing ring 54A. Accordingly, the housing 51A has a thread portion provided at the outer surrounding wall thereof, wherein the first installing ring 53A is mounted on the housing 51A by engaging the thread at the inner wall thereof with the thread portion at the outer surrounding wall of the housing 51A. Similarly, the second installing ring 54A is mounted on the housing 51A by engaging the thread at the inner wall thereof with the thread portion at the outer surrounding wall of the housing 51A. Therefore, the first installing ring 53A and the second installing ring 54A can incorporate with each other to install the ambient-light intensity detector 100A to a stationary fixture.

For example, the stationary fixture can be a ceiling which has an installing hole, wherein the diameter of the outer surrounding wall of the housing 51A is no less than the diameter of the installing hole of the stationary fixture and the diameters of the outer walls of the first installing ring 53A and second installing ring 54A are larger than the diameter of the installing hole of the stationary fixture. To mount the ambient-light intensity detector 100A to the stationary fixture, the second installing ring 54A is firstly mounted on the housing 51A, the upper end 511A of the housing 51A is secondly aligned with and passes through the installing hole of the stationary fixture, and then the first installing ring 53A is mounted on the housing 51A thirdly. As such, the ambient-light intensity detector 100A is installed to the stationary fixture in a manner that the stationary fixture is sandwichedly supported by the first installing ring 53A and second installing ring 54A mounted at two sides of the stationary fixture.

Alternatively, according to an alternative mode of ambient-light intensity detector 100A of the preferred embodiment of the present invention, the first installing ring 53A can be integrally formed on the housing 51A, while the second installing ring 54 is mounted on the housing 51A via a threaded joint means, or that the first installing ring 53A is mounted on the housing 51A via the threaded joint means while the second installing ring 54A is integrally formed on the housing 51A.

Furthermore, referring to Figs. 8A to 8C, the ambient-light intensity detector 100A according to the preferred embodiment of the present invention comprises a controller 70A which has a plurality of preset control scales for controlling the detecting values of the photosensitive element 30A correspondingly, wherein the photosensitive element 30A is controllably linked with the controller 70A. In other words, the plurality of preset control scales of the controller 70A is corresponding to the detecting values of the photosensitive element 30 respectively. In other words, the preset control scales of the controller 70A have a one-to-one matching and corresponding relationship with the detecting values of the photosensitive element 30A.

According to the preferred embodiment of the present invention, by configuring the controller 70A to have the plurality of preset control scales, when the ambient-light intensity detector 100A is enabled to adjust the controller 70A to the same preset control scale in different time periods, the detecting value of the photosensitive element 30A is maintained the same in consistence, thereby enhancing the controllability of the ambient-light intensity detector 100A. For example, the preset control scales of the controller 70A comprises "0-control scale", "1-control scale", "2-control scale", "3-control scale", "4-control scale", "5-control scale", "6-control scale", "7-control scale", "8-control scale", "9-control scale", "A-control scale", "B-control scale", "C-control scale", "D-control scale", "E-control scale", and "F-control scale", wherein when the controller 70A is adjusted from the "A-control scale" to any other control scale and then returned back to the "A-control scale", the detecting values of the photosensitive element 30A while the controller 70A is adjusted at the "A-control scale" for twice will be remained the same, such that the controllability of the ambient-light intensity detector 100A is enhanced.

Accordingly, according to the preferred embodiment of the present invention, by providing the controller 70A with the plurality of preset control scales, the ambient-light intensity detector 100A is able to maintain a consistence of the detecting values of the photosensitive element 30A, so as to enhance the controllability of the ambient-light intensity detector 100A. For example, when two ambient-light intensity detectors 100A are utilized in the use environment, the detecting values of the photosensitive elements 30A of the two ambient-light intensity detectors 100A are maintained the same after each of the controllers 70A of the two ambient-light intensity detectors 100A has been set at the "A-control scale", such that the controllability of the ambient-light intensity detector 100A is enhanced.

Preferably, the controller 70A is embodied as a coding switch that enables the controller 70A to be selectively switched among the preset control scales in a convenience manner. For example, according to the preferred embodiment of the ambient-light intensity detector 100A of the present invention, the controller 70A is embodied as a coding switch comprising a plurality of resistor bodies, wherein the controller 70A is configured with the plurality of control scales by coding a combination relationship among the control scales, such that the error of the controller 70A can be reduced effectively. The controller 70A comprises a control-scale selector 71A for actuating and switching the controller 70A to different preset control scales for adjusting the detecting value of the photosensitive element 30A.

Preferably, the control-scale selector 71A is embodied as a rotation selector so as to reduce the size of the controller 70A. For example, the control-scale selector 71A has an indented groove 711A for mounting an actuation device to control the control-scale selector 71A. Selectively, the control-scale selector 71A can be driven by a driving unit such as a motor.

Furthermore, the housing 51A has an installing slot 515A formed in the surrounding wall of the housing 51A at the lower end 512A of the housing 51A and communicated with the receiving cavity 513A. The controller 70A is attached to the circuit board 60A and extends outwardly from the receiving cavity 513A of the housing 51A to install in the installing slot 515A of the housing 51A, such that the circuit board 60A is retained in the receiving cavity 513A of the housing 51A. After the controller 70A is installed on the housing, the control-scale selector 71A of the controller 70A is arranged to be exposed outside the housing 51A for allowing the plurality of preset control scales of the controller 70A being actuated and selected so as to adjust the detecting values of the photosensitive element 30A.

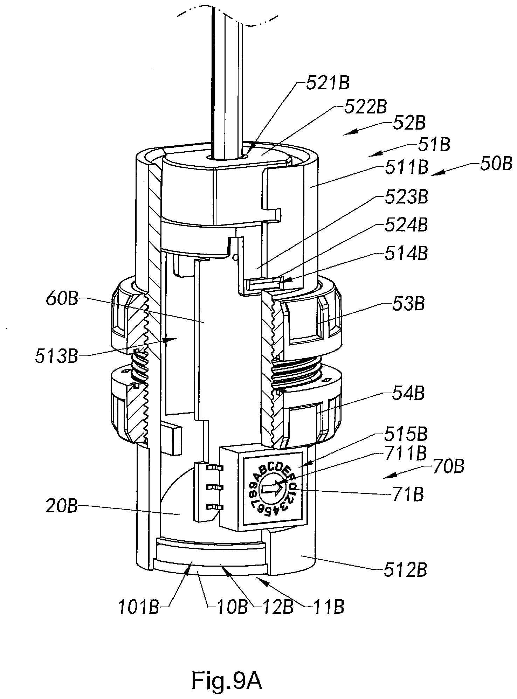

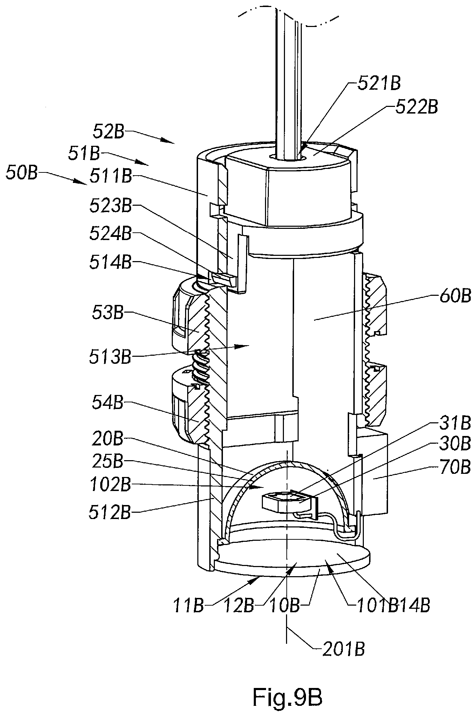

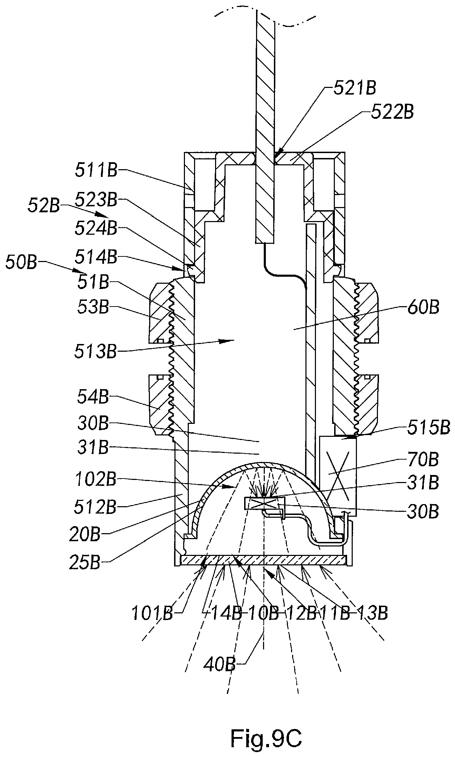

Referring to the Fig. 9A to Fig. 9C, an ambient-light intensity detector according to a third preferred embodiment of the present invention is illustrated, wherein the ambient-light intensity detector 100B comprises a light-uniforming component 10B, a light-converging component 20B and a photosensitive element 30B. The light-converging component 20B defines a light-converging path 40B. The light-uniforming component 10B is retained in the light-converging path 40B defined by the light-converging component 20B. The light-uniforming component 10B is arranged to be retained for processing an uniform and even mixing of the reflection lights reflected from one or more objects in a use environment (where the ambient-light intensity detector 100B is installed) to form a pending detection light while the reflection lights passing through the light-uniforming component 10B. The light-converging component 20B is configured to converge the pending detection light to the light-converging path 40B. The photosensitive element 30B has a photosensitive surface 31B which is retained in the light-converging path 40B defined by the light-converging component 20B and configured to receive the pending detection light after being converged to the light-converging path 40B by the light-converging component 20B. The received detection light is then processed by the photosensitive element 30B so as to detect the intensity of the ambient light in the use environment by detecting the pending detection light.

Accordingly, the ambient-light intensity detector 100B is configured to uniformly and evenly mix the reflection lights reflected from one or more objects in the use environment through the light-uniforming component, such that the reflection lights lose their original propagation directions and form pending the detection light, such that the reflection lights are virtualized for reducing the adverse effects caused by different surface reflectances of the one or more objects in the use environment to the detection result of the ambient-light intensity detector 100B.

Accordingly, the ambient-light intensity detector 100B is able to increase its detection range by converging and/or gathering the pending detection light to the light-converging path 40B by the light-converging component 20B, that enables the reflection lights of more kinds of objects passing through the light-uniforming component 10B, soas to reduce the adverse effects to the detection result caused by different surface reflectances of the one or more objects in the use environment.

Referring to Figs. 9A to 9C, according to the preferred embodiment of ambient-light intensity detector 100B, the light-converging component 20B is a light reflective element which has a concave light reflecting surface 25B, wherein the photosensitive surface 31B of the photosensitive element 30B faces the concave light reflecting surface 25B, wherein the pending detection light is converged to the light-converging path 40B by the light-converging component 20B in such a manner that the detection light emerged from the light-uniforming component 10B is reflected by the concave light reflecting surface 25B of the light-converging component 20B, and then the pending detection light converged to the light-converging path 40B is received by the photosensitive surface 31B of the photosensitive element 30B.

Furthermore, the light-uniforming component 10B has a light-inletting side 11B and an opposing light-outletting side 12B corresponding to the light-inletting side 11B, wherein the light-uniforming component 10B is retained in the light-converging path 40B defined by the light-converging component 20B while the light-outletting side 12B of the light-uniforming component 10B faces the light entering side 21B of the light-converging component 20B, so as to ensure the reflection lights reflected from the one or more objects in the use environment enter the light-inletting side 11B and emerge from the light-outletting side 12B of the light-uniforming component 10B, so as to uniformly and evenly mix and/or diffuse the reflection lights by the light-uniforming component 10B to form the pending detection light. The pending detection light is then converged to the light-converging path 40B by being reflected at the light reflecting surface 25B of the light-converging component 20 for being received by the photosensitive surface 31B of the photosensitive element 30B.

In addition, the light-uniforming component 10B has a light-inletting surface 13B and an opposing light-outletting surface 14B corresponding to the light-inletting surface 13B, wherein the light-inletting surface 13B of the light-uniforming component 10B is a side surface of the light-inletting side 11B of the light-uniforming component 10B and, correspondingly, the light-outletting surface 14B of the light-uniforming component 10B is a side surface at the light-outletting side 12B of the light-uniforming component 10B. The reflection lights reflected from the one or more objects in the use environment enter the light-uniforming component 10B from its light-inletting surface 13B and emerge from its light-outletting surface 14B to form the pending detection light while passing through the light-uniforming component 10B.

It is worth mentioning that the type of the light-inletting surface 13B and the light-outletting surface 14B of the light-uniforming component 10B is not intended to be limiting the scope of the ambient-light intensity detector 100B according to the preferred embodiment of the present invention. For example, both of the light-inletting surface 13B and the light-outletting surface 14B of the light-uniforming component 10B can be embodied as smooth surfaces or rough surfaces. Alternatively, the types of light-inletting surface 13B and the light-outletting surface 14B can be different, that is one of the light-inletting surface 13B and the light-outletting surface 14B of the light-uniforming component 10B is a smooth surface while the other is a rough surface

It is worth mentioning that, although the light-inletting surface 13B and the light-outletting surface 14B of the light-uniforming component 10B are embodied as flat surfaces as an example shown in the Figs. 9A to 9C of the drawings according to the preferred embodiment, those who skilled in the art would understand that the description and features of the ambient-light intensity detector 100B in this preferred embodiment as shown in the Figs. 9A to 9C are not intended to limit the scope of the ambient-light intensity detector 100B of the present invention. In some examples, both the light-inletting surface 13B and the light-outletting surface 14B of the light-uniforming component 10B can be embodied as arc surfaces, either convex arc surface or concave arc surface. Alternatively, one of the light-inletting surface 13B and the light-outletting surface 14B of the light-uniforming component 10B is embodied as a convex surface while the other is embodied as a concave surface.

In addition, according to the preferred embodiment of the present invention as shown in the Figs. 9A to 9C of the drawings, the ambient-light intensity detector 100B comprises an enclosure 50B comprising a tubular housing 51B, wherein the housing 51B has an upper end 511B, an opposed lower end 512B, and a receiving cavity 513B extending from the lower end 512B to the upper end 511B, wherein the light-uniforming component 10B, the light-converging component 20B and the photosensitive element 30B are retained within the receiving cavity 513B of the housing 51B along an axial direction defined in the housing 51B so as to define a detection environment 102B within the tubular housing 51B in order to avoid interference to the detection result of the ambient-light intensity detector 100B by the external light.

More specifically, the light-uniforming component 10B is retained in the receiving cavity 513B of the housing 51B by mounting a sidewall of the light-uniforming component 10B to an inner wall of the housing 51B, while the light-inletting side 11B of the light-uniforming component 10B is arranged to face outside of the housing 51B. The light-converging component 20B is retained in the receiving cavity 513B of the housing 51B by mounting a sidewall of the light-converging component 20B to the inner wall of the housing 51B. The photosensitive element 30B is suspendedly retained in the receiving cavity 513B of the housing 51B with its photosensitive surface 31B facing the light reflecting surface 25B of the light-converging component 20B, wherein a central axis 201B of the light-converging component 20B passes through a center of the photosensitive surface 31B of the photosensitive element 30B. When the ambient-light intensity detector 100B is detecting the intensity of the ambient-light in the use environment thereof, external light is blocked from entering the receiving cavity 513B of the housing 51B by the surrounding wall of the housing 51B, wherein only the light radiating towards the light-inletting side 11B of the light-uniforming component 10B is allowed to enter into the receiving cavity 513B of the housing 51B through the light-uniforming component 10B, such that the pending detection light which is converged by the light-converging component 20B is allowed to be only received and detected by the photosensitive surface 31B of the photosensitive element 30B, so as to avoid interference to the detection result of the ambient-light intensity detector 100B by the external light.

Furthermore, referring to Figs. 9A to 9C, according to the preferred embodiment of the present invention, the ambient-light intensity detector 100B comprises a circuit board 60B retained in the receiving cavity 513B of the housing 51B, wherein the photosensitive element 30B is attached to the circuit board 60B such that the photosensitive element is suspendedly retained in the receiving cavity 513B of the housing 51B.

Preferably, the circuit board 60B is extended in a direction consistent with the axial direction of the housing 51B, that is the circuit board 60B is extended along the axial direction of the housing 51B and the plane defined by the photosensitive surface 31B of the photosensitive element 30B is perpendicular to the extending direction of the circuit board 60B, such that the photosensitive surface 31B of the photosensitive element 30B and the circuit board 60B are extended perpendicular with each other so as to ensure the photosensitive surface 31B of the photosensitive element 30B facing the light reflecting surface 25B of the light-converging component 20B. Alternatively, the extending direction of the circuit board 60B is perpendicular to the axial direction of the housing 51B, and the plane defined by the photosensitive surface 31B of the photosensitive element 30B is parallel to the extending direction of the circuit board 60B, so as to ensure the photosensitive surface 31B of the photosensitive element 30B facing the light reflecting surface 25B of the light-converging component 20B.

The housing 51B further comprises a cover 52B having a through hole 521B, wherein the receiving cavity 513B of the housing 51B is thoroughly extended from the lower end 512B to the upper end 511B thereof, wherein after the circuit board 60B is installed in the receiving cavity 513B of the housing 51B, the cover 52B is mounted at the receiving cavity 513B of the housing 51B to enclose an upper opening of the receiving cavity 513B of the housing 51B and an electric wiring is extended into the receiving cavity 513B of the housing 51B and electrically connected to circuit board 60B through the through hole 521B of the cover 52B fittingly.

Furthermore, the housing 51B has at least two engaging slots 514B, formed in the surrounding wall of the housing 51B at the upper end 511B thereof, communicating with the receiving cavity 513B. The cover 52B comprises a cover body 522B, at least two mounting arms 523B extended from the cover body 522B, and at least two engaging protrusions 524B protruded from two opposing sides of a free end of each mounting arm 523B. The cover 52B is installed at the upper end 511B of the housing 51B by inserting the mounting arms 523B of the cover 52B into the upper opening of the receiving cavity 513B of the housing 51B and engaging the engaging protrusions 524B of the cover 52B into the engaging slots 514B of the housing 51B respectively and automatically due to the elasticity of the mounting arms 523B, so as to enclose the upper opening of the receiving cavity 513B of the housing by the cover 52B.

As shown in the Figs. 9A to 9C of the drawings, the enclosure 50B further comprises a first installing ring 53B and a second installing ring 54B, wherein threads are formed at the inner walls of the first installing ring 53B and second installing ring 54B. Accordingly, the housing 51B has a thread portion provided on the outer surrounding wall thereof, wherein the first installing ring 53B is mounted on the housing 51B by engaging its thread at the inner wall thereof with the thread portion at the outer surrounding wall of the housing 51B. Similarly, the second installing ring 54B is mounted on the housing 51B by engaging the thread at the inner wall thereof with the thread portion at the outer surrounding wall of the housing 51B. Therefore, the first installing ring 53B and the second installing ring 54B can incorporate with each other to install the ambient-light intensity detector 100B to a stationary fixture.

For instance, the stationary fixture can be a ceiling which has an installing hole, wherein the diameter of the outer surrounding wall of the housing 51B is no less than the diameter of the stationary fixture and the diameters of the outer walls of the first installing ring 53B and second installing ring 54B are larger than the diameter of the stationary fixture. To mount the ambient-light intensity detector 100B to the stationary fixture, the second installing ring 54B is firstly mounted on the housing 51B, the upper end 511B of the housing 51B is aligned with and passes through the installing hole of the stationary fixture secondly, and then the first installing ring 53B is mounted on the housing 51B thirdly. As such, the ambient-light intensity detector 100B is installed to the stationary fixture in a manner that the stationary fixture is sandwichedly supported by the first installing ring 53B and the second installing ring 54B mounted at two sides of the stationary fixture.

Alternatively, according to an alternative mode of the preferred embodiment of the present invention, the first installing ring 53B can be integrally formed on the housing 51B while the second installing ring 54B is mounted on the housing 51B by a threaded joint means, or that the first installing ring 53B is mounted on the housing 51B by the threaded joint means while the second installing ring 54B is integrally formed on the housing 51B.

In addition, referring to Figs. 9A to 9C, the ambient-light intensity detector 100B according to the preferred embodiment of the present invention comprises a controller 70B which is controllably linked to the photosensitive element 30B and provided with a plurality of preset control scales for controlling the detecting values of the photosensitive element 30B. In other words, the plurality of preset control scales of the controller 70B is corresponding with the different detecting values of the photosensitive element 30 respectively, that is the preset control scales of the controller 70B have a one-to-one matching and corresponding relationship with the detecting values of the photosensitive element 30B.

According to the ambient-light intensity detector 100B of the third preferred embodiment of the present invention, since the controller 70A is provided with the plurality of preset control scales, the ambient-light intensity detector 100B is capable of adjusting the controller 70A to the same preset control scale in different time periods to maintain a consistence of the detecting values of the photosensitive element 30B, thereby enhancing the controllability of the ambient-light intensity detector 100B. For example, the preset control scales of the controller 70B include "0-control scale", "1-control scale", "2-control scale", "3-control scale", "4-control scale", "5-control scale", "6-control scale", "7-control scale", "8-control scale", "9-control scale", "A-control scale", "B-control scale", "C-control scale", "D-control scale", "E-control scale", and "F-control scale", wherein when the controller 70B is adjusted from the "A-control scale" to any other control scale and then returned back to the "A-control scale", the detecting value of the photosensitive element 30B will be remained the same at the "A-control scale" for twice, such that the controllability of the ambient-light intensity detector 100B is enhanced.

According to the ambient-light intensity detector 100B of the third preferred embodiment of the present invention, by configuring the controller 70B to have the plurality of preset control scales, the ambient-light intensity detector 100B is able to maintain the same detecting value for the photosensitive element 30B, so as to enhance the controllability of the ambient-light intensity detector 100B. For example, when two ambient-light intensity detectors 100B are utilized in the use environment, the detecting values of the photosensitive elements 30B of the two ambient-light intensity detectors 100B are consistence with each other when the controllers 70B of the two ambient-light intensity detector 100B are set to the same preset control-scale such as the "A-control scales", such that the controllability of the ambient-light intensity detector 100B is enhanced.

Preferably, the controller 70B is embodied as a coding switch for ease to selectively switch among the preset control scales. In one example, the controller 70B of the ambient-light intensity detector 100B comprises a plurality of resistor bodies, wherein the controller 70B is configured with the plurality of control scales by selecting or adjusting the resistance of different resistor bodies or coding a combination relationship of the resistor bodies, so that the error of the controller 70B can be reduced effectively. The controller 70B comprises a control-scale selector 71B for actuating and switching the controller 70B to different preset control scales for adjusting the detecting value of the photosensitive element 30B.

Preferably, the control-scale selector 71B is embodied as a rotation selector to reduce the size of the controller 70B. For example, the control-scale selector 71B has an indented groove 711B for mounting an actuation device to control the control-scale selector 71B. Selectively, the control-scale selector 71B can be driven by a driving unit such as a motor.

In addition, the housing 51B has an installing slot 515B formed in the surrounding wall of the housing 51B at the lower end 512B thereof, wherein the installing slot 515B is communicated with the receiving cavity 513B. The controller 70B is attached to the circuit board 60B and installed in the installing slot 515B while extending outside of the receiving cavity 513B of the housing 51B, such that the circuit board 60B is retained in the receiving cavity 513B of the housing 51B. After the controller 70B is installed on the housing 51B, the control-scale selector 71B of the controller 70B is exposed outside of the housing 51B, for allowing the plurality of preset control scales of the controller 70B being actuated and selected for adjusting the detecting values of the photosensitive element 30B.

## Claims

1. An ambient-light intensity detector (100) for a light system comprising one or more lighting fixtures (200) installed adjacent to said ambient-light intensity detector in a use environment for illuminating external lights towards at least one object in the use environment to form at least one reflection light reflected from said at least one object, wherein said ambient-light intensity detector, adapted for detecting an intensity of the at least one reflection light reflected from the at least one object in the use environment, comprises:
an enclosure (50, 050A, 50B) comprising a tubular housing (51, 51A, 51B) which has a first end, an opposing second end and a receiving cavity (513, 513A, 513B) between said first end and said second end, wherein a detection environment (102, 102A, 102B) is defined and enclosed within said receiving cavity of said tubular housing, wherein said tubular housing comprises a surrounding wall to block external lights from entering said receiving cavity while allowing the at least one reflection light reflected from the at least one object in the use environment entering into said receiving cavity via said first end thereof;
a light-uniforming component (10, 10A, 10B), retained in said receiving cavity adjacent to said first end of said tubular housing along a longitudinal direction of said receiving cavity, having a light-outletting surface (14, 14A, 14B) and a light-inletting surface (13, 13A, 13B) exposed to outside of said tubular housing for allowing the at least one reflection light reflected from the at least one object in the use environment entering said light-uniforming component via said light-inletting surface thereof, such that said light-uniforming component is configured to uniformly and evenly mix the at least one reflection light reflected from the at least one object in the use environment to form one or more a pending detection lights during the at least one reflection light passing through said light-uniforming component;
a light-converging component (20, 20A, 20B) retained within said receiving cavity of said tubular housing along said longitudinal direction thereof to define said detection environment within said tubular housing, wherein said light-converging component, which has a light-entering surface (23, 23A) and a light-emerging surface (24, 24A) and defines a light-converging path (40, 40A, 40B), wherein said light-converging component is configured to converge the one or more pending detection lights to said light-converging path, wherein said light-uniforming component is retained in said light-converging path while said light-outletting surface of said light-uniforming component facing said light-entering surface of said light-converging component; and
a photosensitive element (30, 30A) having a photosensitive surface (31, 31A, 31B) wherein said photosensitive element is suspendedly retained along said light-converging path in said receiving cavity of said tubular housing with said photosensitive surface facing said light-emerging surface of said light-converging component, wherein said photosensitive surface of said photosensitive element is configured to receive the one or more pending detection lights after being converged to said light-converging path through said light-converging component for detecting the intensity of each of the pending detection lights after being converged by said light-converging component.

2. The ambient-light intensity detector (100) as recited in claim 1, further comprising a light-deflecting component (80A) arranged in said light-converging path (40, 40A, 40B) and configured to deflect the one or more pending detection lights such that said photosensitive surface (31, 31A, 31B) facing said light-emerging surface (24, 24A) of said light-converging component (20, 20A, 20B) through said light-deflecting component, wherein after the one or more pending detection lights being converged to said light-converging path through said light-converging component, said light-deflecting component deflects the one or more pending detection lights to a direction that is able to be received by said photosensitive surface of the photosensitive element (30, 30A).

3. The ambient-light intensity detector (100), as recited in claim 1, wherein a central axis (201, 201A) of said light-converging component (20, 20A, 20B) is extended through a center of said photosensitive element, wherein a cross section of said light-converging component from any position along an axial direction thereof is in centrosymmetric shape and a center of which is in said central axis defined by said light-converging component, wherein a cross section of said light-uniforming component (10, 10A, 10B) from any position along an axial direction thereof is in centrosymmetric shape and a center of which is in said central axis defined by said light-converging component.

4. The ambient-light intensity detector (100), as recited in claim 2, wherein said light-converging component (20, 20A, 20B) defines a central axis, wherein a cross section of said light-converging component from any position along an axial direction thereof is in centrosymmetric shape and a center of which is in said central axis defined by said light-converging component, wherein a cross section of said light-uniforming component (10, 10A, 10B) from any position along an axial direction thereof is in centrosymmetric shape and a center of which is in said central axis defined by said light-converging component.

5. The ambient-light intensity detector (100), as recited in claim 1, 2 or 4 further comprising a controller (70, 70A, 70B) which has a plurality of preset control scales, wherein said photosensitive element (30, 30A) is controllably linked with said controller and said preset control scales of the controller are corresponding to detection values of said photosensitive element respectively, said controller is configured to adjust among said preset control scales while said preset control scales have a one-to-one mapping relationship with said detection values of said photosensitive element.

6. The ambient-light intensity detector (100), as recited in claim 1, 2 or 5, wherein a distance between said photosensitive surface (31, 31A, 31B) of said photosensitive element (30, 30A) and said light-emerging surface (24, 24A) of said light-converging component (20, 20A, 20B) is a detecting range which is adjustable by changing said distance between said photosensitive surface of said photosensitive element and said light-emerging surface of said light-converging component while installing said ambient-light intensity detector to a stationary fixture in the use environment.

7. The ambient-light intensity detector (100), as recited in claim 1 or 2, wherein a gap (101, 101A) is formed between said light-outletting surface (14, 14A, 14B) of said light-uniforming component (10, 10A, 10B) and said light-entering surface (23, 23A) of said light-converging component (20, 20A, 20B) to fill a gas therein for reducing energy-loss of the one or more pending detection lights while emerging from said light-outletting surface of said light-uniforming component, propagating through said gap and entering the light-converging component through said light-entering surface thereof.

8. The ambient-light intensity detector (100), as recited in claims 1, 2 or 6 wherein said light-outletting surface (14, 14A, 14B) of said light-uniforming component (10, 10A, 10B) is overlappedly attached to said light-entering surface (23, 23A) of said light-converging component (20, 20A, 20B).

9. The ambient-light intensity detector (100), as recited in claim 1, 2, 7 or 8 wherein said light-converging component (20, 20A, 20B) is selected from the group consisting of a Fresnel lens, a condenser lens and a condenser lens combination.

## Patentansprüche

1. Umgebungslicht-Intensitätsdetektor (100) für ein Beleuchtungssystem, das ein oder mehrere Beleuchtungsarmaturen (200) umfasst, die neben dem Umgebungslicht-Intensitätsdetektor in einer Nutzungsumgebung zur Beleuchtung von mindestens einem Objekt in der Nutzungsumgebung mit externem Licht installiert sind, um mindestens ein Reflexionslicht zu bilden, das von dem mindestens einen Objekt reflektiert wird, wobei der Umgebungslicht-Intensitätsdetektor, der zum Feststellen einer Intensität des mindestens einen Reflexionslichtes ausgelegt ist, das von dem mindestens einen Objekt in der Nutzungsumgebung reflektiert wird, umfasst:
eine Hülle (50, 50A, 50B) mit einem rohrförmigen Gehäuse (51, 51A, 51B), das ein erstes Ende, ein gegenüberliegendes zweites Ende und einen Aufnahmehohlraum (513, 513A, 513B) zwischen dem ersten und dem zweiten Ende hat, wobei eine Erfassungsumgebung (102, 102A, 102B) innerhalb des Aufnahmehohlraums des rohrförmigen Gehäuses definiert und umschlossen ist, wobei das rohrförmige Gehäuse eine umgebende Wand umfasst, um das Eindringen von Außenlicht in den Aufnahmehohlraum zu verhindern, während das mindestens eine Reflexionslicht, das von dem mindestens einen Objekt in der Nutzungsumgebung reflektiert wird, in den Aufnahmehohlraum über das erste Ende desselben eintreten kann;
eine Licht vergleichmäßigende Komponente (10, 10A, 10B), im Aufnahmehohlraum neben dem ersten Ende des rohrförmigen Gehäuses entlang einer Längsrichtung des Aufnahmehohlraums angeordnet, die eine Lichtaustrittsfläche (14, 14A, 14B) und eine Lichteintrittsfläche (13, 13A, 13B) hat, die zur Außenseite des rohrförmigen Gehäuses freiliegt, um zu ermöglichen, dass das mindestens eine Reflexionslicht, das von dem mindestens einen Objekt in der Nutzungsumgebung reflektiert wird, in die Licht vergleichmäßigende Komponente über die Lichteinlassfläche derselben derart eintritt, dass die Licht vergleichmäßigende Komponente dafür ausgelegt ist, das mindestens eine Reflexionslicht, das von dem mindestens einen Objekt in der Nutzungsumgebung reflektiert wird, gleichförmig und gleichmäßig zu mischen, um eine oder mehrere hängende Erfassungslampen zu bilden, während das mindestens eine Reflexionslicht durch die Licht vergleichmäßigende Komponente läuft;
eine lichtbündelnde Komponente (20, 20A, 20B), die im Aufnahmehohlraum des rohrförmigen Gehäuses entlang der Längsrichtung desselben angeordnet ist, um die Erfassungsumgebung innerhalb des rohrförmigen Gehäuses zu definieren, wobei die lichtbündelnde Komponente, die eine Lichteintrittsfläche (23, 23A) und eine Lichtaustrittsfläche (24, 24A) und einen Lichtbündelungspfad (40, 40A, 40B) hat, zum Bündeln des einen oder der mehreren hängenden Erfassungsstrahlen auf den Lichtbündelungspfad ausgelegt ist, wobei die Licht vergleichmäßigende Komponente im Lichtbündelungspfad gehalten wird, während die eine Lichtaustrittsfläche der Licht vergleichmäßigenden Komponente der Lichteintrittsfläche der lichtbündelnden Komponente gegenüberliegt; und
ein lichtempfindliches Element (30, 30A), das eine lichtempfindliche Fläche (31, 31A, 31B) hat, wobei das lichtempfindliche Element entlang des Lichtbündelungspfades in dem aufnehmenden Hohlraum des rohrförmigen Gehäuses hängend gehalten wird, wobei die lichtempfindliche Fläche der Lichtaustrittsfläche der lichtbündelnden Komponente gegenüberliegt, wobei die lichtempfindliche Fläche des lichtempfindlichen Elementes zum Aufnehmen des einen oder der mehreren Erfassungsstrahlen ausgelegt ist, nachdem sie auf den Lichtbündelungspfad durch die lichtbündelnde Komponente zum Erfassen der Intensität jeder der Erfassungsstrahlen durch die lichtbündelnde Komponente zusammengeführt wurden.

2. Umgebungslicht-Intensitätsdetektor (100) nach Anspruch 1, der ferner eine lichtablenkende Komponente (80A) umfasst, die im Lichtbündelungspfad (40, 40A, 40B) angeordnet und zum Ablenken der einen oder mehreren Erfassungsstrahlen derart ausgelegt ist, dass die lichtempfindliche Fläche (31, 31A, 31B) der Lichtaustrittsfläche (24, 24A) der lichtbündelnden Komponente (20, 20A, 20B) durch die lichtablenkende Komponente gegenüberliegt, wobei, nachdem der eine oder die mehreren Erfassungsstrahlen auf den Lichtbündelungspfad zusammengeführt wurden, die lichtablenkende Komponente den einen oder die mehreren Erfassungsstrahlen in eine Richtung ablenkt, die von der lichtempfindlichen Fläche des lichtempfindlichen Elementes (30, 30A) aufgenommen werden kann.

3. Umgebungslicht-Intensitätsdetektor (100) nach Anspruch 1, wobei eine Mittelachse (201, 201A) der lichtbündelnden Komponente (20, 20A, 20B) durch eine Mitte des lichtempfindlichen Elementes verläuft, wobei ein Querschnitt der lichtbündelnden Komponente von jeder Position entlang einer axialen Richtung derselben eine zentralsymmetrische Form hat und eine Mitte derselben in der zentralsymmetrischen Achse liegt, die durch die lichtbündelnde Komponente definiert wird, wobei ein Querschnitt der Licht vergleichmäßigenden Komponente (10, 10A, 10B) von einer beliebigen Position entlang einer axialen Richtung derselben eine zentralsymmetrische Form hat und deren Mitte in der Mittelachse liegt, die durch die lichtbündelnde Komponente definiert wird.

4. Umgebungslicht-Intensitätsdetektor (100) nach Anspruch 2, wobei die lichtbündelnde Komponente (20, 20A, 20B) eine Mittelachse definiert, wobei ein Querschnitt der lichtbündelnden Komponente von jeder Position entlang einer axialen Richtung derselben eine zentralsymmetrische Form hat und eine Mitte derselben in der Mittelachse liegt, die durch die lichtbündelnde Komponente definiert wird, wobei ein Querschnitt der Licht vergleichmäßigenden Komponente (10, 10A, 10B) von einer beliebigen Position entlang einer axialen Richtung derselben eine zentralsymmetrische Form hat und deren Mitte, die in der Mittelachse liegt, durch die lichtbündelnde Komponente definiert wird.

5. Umgebungslichtintensitätsdetektor (100) nach Anspruch 1, 2 oder 4, der ferner eine Steuerung (70, 70A, 70B) umfasst, die eine Vielzahl von voreingestellten Kontrollskalen hat, wobei das lichtempfindliche Element (30, 30A) steuerbar mit der Steuerung verbunden ist, und die voreingestellten Kontrollskalen der Steuerung jeweils den Erfassungswerten des lichtempfindlichen Elementes entsprechen, wobei die Steuerung sich zwischen den voreingestellten Kontrollskalen einstellen lässt, während die voreingestellten Kontrollskalen eine eins-zu-eins-Abbildungsbeziehung zu den Erfassungswerten des lichtempfindlichen Elementes haben.

6. Umgebungslicht-Intensitätsdetektor (100) nach Anspruch 1, 2 oder 5, wobei ein Abstand zwischen der lichtempfindlichen Fläche (31, 31A, 31B) des lichtempfindlichen Elementes (30, 30A) und der Lichtaustrittsfläche (24, 24A) der lichtbündelnden Komponente (20, 20A, 20B) ein Erfassungsbereich ist, der durch Ändern des Abstandes zwischen der lichtempfindlichen Fläche des lichtempfindlichen Elementes und der Lichtaustrittsfläche der lichtbündelnden Komponente während der Installation des Umgebungslicht-Intensitätsdetektors an einer stationären Vorrichtung in der Nutzerumgebung einstellbar ist.

7. Umgebungslicht-Intensitätsdetektor (100) nach Anspruch 1 oder 2, wobei ein Spalt (101, 101A) zwischen der Lichtaustrittsfläche (14, 14A, 14B) der Licht vergleichmäßigenden Komponente (10, 10A, 10B) und der Lichteintrittsfläche (23, 23A) der lichtbündelnden Komponente (20, 20A, 20B) gebildet ist, um ein Gas darin zum Reduzieren von Energieverlusten der einen oder mehreren hängenden Erfassungslampen einzufüllen, während es aus der Lichtaustrittsfläche der Licht vergleichmäßigenden Komponente austritt, sich durch den Spalt ausbreitet und in die lichtbündelnde Komponente durch die Lichteinlassfläche derselben eintritt.

8. Umgebungslicht-Intensitätsdetektor (100) nach Anspruch 1, 2 oder 6, wobei die Lichtaustrittsfläche (14, 14A, 14B) der Licht vergleichmäßigenden Komponente (10, 10A, 10B) überlappend an der Lichteintrittsfläche (23, 23A) der lichtbündelnden Komponente (20, 20A, 20B) befestigt ist.

9. Umgebungslicht-Intensitätsdetektor (100) nach Anspruch 1, 2, 7 oder 8, wobei die lichtbündelnde Komponente (20, 20A, 20B) aus der Gruppe ausgewählt wird, die aus einer Fresnel-Linse, einer Kondensorlinse und einer Kondensorlinsenkombination besteht.

## Revendications

1. Détecteur d'intensité de lumière ambiante (100) pour un système à lumière comprenant un ou plusieurs appareils d'éclairage (200) installés adjacents audit détecteur d'intensité de lumière ambiante dans un environnement d'utilisation pour allumer des lumières externes vers au moins un objet dans l'environnement d'utilisation pour former au moins une lumière de réflexion réfléchie depuis ledit au moins un objet, dans lequel ledit détecteur d'intensité de lumière ambiante, adapté pour détecter une intensité de l'au moins une lumière de réflexion réfléchie depuis l'au moins un objet dans l'environnement d'utilisation, comprend :
une enceinte (50, 50A, 50B) comprenant un logement tubulaire (51, 51A, 51B) qui a une première extrémité, une seconde extrémité opposée et une cavité de réception (513, 513A, 513B) entre ladite première extrémité et ladite seconde extrémité, dans lequel un environnement de détection (102, 102A, 102B) est défini et enfermé dans ladite cavité de réception dudit logement tubulaire, dans lequel ledit logement tubulaire comprend une paroi périphérique pour empêcher des lumières externes de pénétrer dans ladite cavité de réception tout en permettant à l'au moins une lumière de réflexion réfléchie depuis l'au moins un objet dans l'environnement d'utilisation de pénétrer dans ladite cavité de réception via ladite première extrémité de celle-ci ;
un composant d'uniformisation de lumière (10, 10A, 10B), retenu dans ladite cavité de réception, adjacent à ladite première extrémité dudit logement tubulaire le long d'une direction longitudinale de ladite cavité de réception, ayant une surface de sortie de lumière (14, 14A, 14B) et une surface d'entrée de lumière (13, 13A, 13B) exposées à l'extérieur dudit logement tubulaire pour permettre à l'au moins une lumière de réflexion réfléchie depuis l'au moins un objet dans l'environnement d'utilisation de pénétrer dans ledit composant d'uniformisation de lumière via ladite surface d'entrée de lumière de celui-ci, de sorte que ledit composant d'uniformisation de lumière soit configuré pour mélanger de manière uniforme et régulière l'au moins une lumière de réflexion réfléchie depuis l'au moins un objet dans l'environnement d'utilisation pour former une ou plusieurs lumières de détection en suspens pendant que l'au moins une lumière de réflexion passe à travers ledit composant d'uniformisation de lumière ;
un composant de convergence de lumière (20, 20A, 20B) retenu à l'intérieur de ladite cavité de réception dudit logement tubulaire le long de ladite direction longitudinale de celui-ci pour définir ledit environnement de détection à l'intérieur dudit logement tubulaire, dans lequel ledit composant de convergence de lumière, qui a une surface de pénétration de lumière (23, 23A) et une surface d'apparition de lumière (24, 24A) et définit un trajet de convergence de lumière (40, 40A, 40B), dans lequel ledit composant de convergence de lumière est configuré pour faire converger les une ou plusieurs lumières de détection en suspens vers ledit trajet de convergence de lumière, dans lequel ledit composant d'uniformisation de lumière est retenu dans ledit trajet de convergence de lumière tandis que ladite surface de sortie de lumière dudit composant d'uniformisation de lumière est tournée vers ladite surface de pénétration de lumière dudit composant de convergence de lumière ; et
un élément photosensible (30, 30A) ayant une surface photosensible (31, 31A, 31B), dans lequel ledit élément photosensible est retenu en suspension le long dudit trajet de convergence de lumière dans ladite cavité de réception dudit logement tubulaire, ladite surface photosensible étant tournée vers ladite surface d'apparition de lumière dudit composant de convergence de lumière, dans lequel ladite surface photosensible dudit élément photosensible est configurée pour recevoir les une ou plusieurs lumières de détection en suspens après leur convergence vers ledit trajet de convergence de lumière à travers ledit composant de convergence de lumière pour détecter l'intensité de chacune des lumières de détection en suspens après leur convergence par ledit composant de convergence de lumière.

2. Détecteur d'intensité de lumière ambiante (100) selon la revendication 1, comprenant en outre un composant de déviation de lumière (80A) agencé dans ledit trajet de convergence de lumière (40, 40A, 40B) et configuré pour dévier les une ou plusieurs lumières de détection en suspens de sorte que ladite surface photosensible (31, 31A, 31B) soit tournée vers ladite surface d'apparition de lumière (24, 24A) dudit composant de convergence de lumière (20, 20A, 20B) à travers ledit composant de déviation de lumière, dans lequel après la convergence des une ou plusieurs lumières de détection en suspens vers ledit trajet de convergence de lumière à travers ledit composant de convergence de lumière, ledit composant de déviation de lumière dévie les une ou plusieurs lumières de détection en suspens vers une direction qui peut être reçue par ladite surface photosensible de l'élément photosensible (30, 30A).

3. Détecteur d'intensité de lumière ambiante (100) selon la revendication 1, dans lequel un axe central (201, 201A) dudit composant de convergence de lumière (20, 20A, 20B) s'étend à travers un centre dudit élément photosensible, dans lequel une section transversale dudit composant de convergence de lumière depuis n'importe quelle position le long d'une direction axiale de celui-ci est de forme centrosymétrique et son centre se trouve dans ledit axe central défini par ledit composant de convergence de lumière, dans lequel une section transversale dudit composant d'uniformisation de lumière (10, 10A, 10B) depuis n'importe quelle position le long d'une direction axiale de celui-ci est de forme centrosymétrique et son centre se trouve dans ledit axe central défini par ledit composant de convergence de lumière.

4. Détecteur d'intensité de lumière ambiante (100), selon la revendication 2, dans lequel ledit composant de convergence de lumière (20, 20A, 20B) définit un axe central, dans lequel une section transversale dudit composant de convergence de lumière depuis n'importe quelle position le long d'une direction axiale de celui-ci est de forme centrosymétrique et son centre se trouve dans ledit axe central défini par ledit composant de convergence de lumière, dans lequel une section transversale dudit composant d'uniformisation de lumière (10, 10A, 10B) depuis n'importe quelle position le long d'une direction axiale de celui-ci est de forme centrosymétrique et son centre se trouve dans ledit axe central défini par ledit composant de convergence de lumière.

5. Détecteur d'intensité de lumière ambiante (100), selon la revendication 1, 2 ou 4 comprenant en outre un dispositif de commande (70, 70A, 70B) qui a une pluralité d'échelles de commande prédéfinies, dans lequel ledit élément photosensible (30, 30A) est lié de manière commandée audit dispositif de commande et lesdites échelles de commande prédéfinies du dispositif de commande correspondent à des valeurs de détection dudit élément photosensible respectivement, ledit dispositif de commande est configuré pour un réglage suivant lesdites échelles de commande prédéfinies tandis que lesdites échelles de commande prédéfinies ont une relation de mappage un à un avec lesdites valeurs de détection dudit élément photosensible.

6. Détecteur d'intensité de lumière ambiante (100), selon la revendication 1, 2 ou 5, dans lequel une distance entre ladite surface photosensible (31, 31A, 31B) dudit élément photosensible (30, 30A) et ladite surface d'apparition de lumière (24, 24A) dudit composant de convergence de lumière (20, 20A, 20B) est une plage de détection qui est réglable en changeant ladite distance entre ladite surface photosensible dudit élément photosensible et ladite surface d'apparition de lumière dudit composant de convergence de lumière tout en installant ledit détecteur d'intensité de lumière ambiante (100) sur un appareil immobile dans l'environnement d'utilisation.

7. Détecteur d'intensité de lumière ambiante (100), selon la revendication 1 ou 2, dans lequel un espace (101, 101A) est formé entre ladite surface de sortie de lumière (14, 14A, 14B) dudit composant d'uniformisation de lumière (10, 10A, 10B) et ladite surface de pénétration de lumière (23, 23A) dudit composant de convergence de lumière (20, 20A, 20B) pour y remplir un gaz afin de réduire une perte d'énergie des une ou plusieurs lumières de détection en suspens tout en apparaissant depuis ladite surface de sortie de lumière dudit composant d'uniformisation de lumière, en se propageant à travers ledit espace et en pénétrant dans le composant de convergence de lumière à travers ladite surface de pénétration de lumière de celui-ci.

8. Détecteur d'intensité de lumière ambiante (100), selon la revendication 1, 2 ou 6 dans lequel ladite surface de sortie de lumière (14, 14A, 14B) dudit composant d'uniformisation de lumière (10, 10A, 10B) est fixée de manière chevauchante à ladite surface de pénétration de lumière (23, 23A) dudit composant de convergence de lumière (20, 20A, 20B).

9. Détecteur d'intensité de lumière ambiante (100), selon la revendication 1, 2, 7 ou 8 dans lequel ledit composant de convergence de lumière (20, 20A, 20B) est sélectionné dans le groupe constitué d'une lentille de Fresnel, d'une lentille de condenseur et d'une combinaison de lentilles de condenseur.
